(19) Europäisches Patentamt
European Patent Office
Office européen des brevets

(11) **EP 3 863 865 B1**

(12) **FASCICULE DE BREVET EUROPEEN**

(45) Date de publication et mention de la délivrance du brevet:
**09.04.2025 Bulletin 2025/15**

(21) Numéro de dépôt: **19816371.9**

(22) Date de dépôt: **08.10.2019**

(51) Classification Internationale des Brevets (IPC):
***B60C 1/00*** *(2006.01)* ***C08L 7/00*** *(2006.01)*
***C08L 9/00*** *(2006.01)* ***C08L 9/06*** *(2006.01)*

(52) Classification Coopérative des Brevets (CPC):
(C-Sets disponibles)
**C08L 7/00; B60C 1/00; C08L 9/00; C08L 9/06**
(Cont.)

(86) Numéro de dépôt international:
**PCT/FR2019/052377**

(87) Numéro de publication internationale:
**WO 2020/074821 (16.04.2020 Gazette 2020/16)**

(54) **COMPOSITION DE CAOUTCHOUC POUR APPLICATIONS DYNAMIQUES, SON PROCEDE DE PREPARATION, PRODUITS L'INCORPORANT ET UTILISATIONS**

KAUTSCHUKZUSAMMENSETZUNG FÜR DYNAMISCHE ANWENDUNGEN, VERFAHREN ZU IHRER HERSTELLUNG, DIESE ENTHALTENDE PRODUKTE UND IHRE VERWENDUNGEN

RUBBER COMPOSITION FOR DYNAMIC USES, PRODUCTION METHOD THEREOF, PRODUCTS CONTAINING SAME, AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2018 FR 1859354**

(43) Date de publication de la demande:
**18.08.2021 Bulletin 2021/33**

(73) Titulaire: **HUTCHINSON**
**75008 Paris (FR)**

(72) Inventeurs:
- **LE ROSSIGNOL, Benoit**
  **56000 VANNES (FR)**
- **GUO, Laina**
  **45200 MONTARGIS (FR)**
- **DUBAA, Marie**
  **31170 TOURNEFEUILLE (FR)**
- **WOISEL, Patrice**
  **59270 BAILLEUL (FR)**

(74) Mandataire: **Plasseraud IP**
**104 Rue de Richelieu**
**CS92104**
**75080 Paris Cedex 02 (FR)**

(56) Documents cités:
**US-B2- 8 883 929**

- **DEEPALEKSHMI PONNAMMA ET AL: "Interrelated shape memory and Payne effect in polyurethane/graphene oxide nanocomposites", RSC ADVANCES, vol. 3, no. 36, 2 July 2013 (2013-07-02), pages 16068, XP055178535, ISSN: 2046-2069, DOI: 10.1039/c3ra41395k**
- **YU MIAO ET AL: "Understanding the reinforcing behaviors of polyaniline-modified carbonyl iron particles in magnetorheological elastomer based on polyurethane/epoxy resin IPNs matrix", COMPOSITES SCIENCE AND TECHNOLOGY, ELSEVIER, AMSTERDAM, NL, vol. 139, 10 December 2016 (2016-12-10), pages 36 - 46, XP029884709, ISSN: 0266-3538, DOI: 10.1016/J.COMPSCITECH.2016.12.010**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**(Cont. page suivante)**

- **LUGINSLAND H-D ET AL: "Influence of different silanes on the reinforcement of silica-filled rubber compounds", RUBBER CHEMISTRY AND TECHNOLOGY, AMERICAN CHEMICAL SOCIETY, RUBBER DIVISION, US, vol. 4, 1 September 2002 (2002-09-01), pages 563 - 579, XP009184214, ISSN: 0035-9475, DOI: 10.5254/ 1.3544984**

(52) Classification Coopérative des Brevets (CPC): (Cont.)

C-Sets
**C08L 7/00, C08L 75/04, C08K 3/04;**
**C08L 9/00, C08L 75/04, C08K 3/04;**
**C08L 9/06, C08L 75/04, C08K 3/04**

## Description

La présente invention concerne une composition de caoutchouc utilisable dans un organe mécanique à fonction dynamique, un procédé de préparation de cette composition, un tel organe et une utilisation d'un polymère à fonctions uréthanes. L'invention s'applique notamment à des organes mécaniques en particulier choisis parmi des supports antivibratoires et des articulations élastiques pour véhicules à moteur ou dispositifs industriels, à titre non limitatif.

De manière connue, les polyuréthanes (PU) sont obtenus par réaction entre des groupes fonctionnels isocyanate (NCO) et alcool (OH) pour l'obtention de la fonction uréthane (NHCOO).

Parmi les polyuréthanes qui sont typiquement préparés par la réaction entre un premier précurseur constitué d'un polyisocyanate, un second précurseur constitué d'un polyol à chaîne longue et un allongeur de chaîne de type polyol, on connaît les polyuréthanes segmentés qui comprennent des segments souples formés par le second précurseur et des segments rigides formés par le premier précurseur et l'allongeur de chaîne, avec une séparation de phases entre ces segments souples et rigides qui sont immiscibles entre eux.

Le document WO-A1-2015/032681 concerne des mélanges de polyuréthanes thermoplastiques et de caoutchoucs notamment pour des rouleaux d'impression, et divulgue exclusivement dans ses exemples l'obtention *in situ* d'un polyuréthane-urée entremêlé à un caoutchouc nitrile (NBR) par réaction de ce dernier avec un unique prépolymère préalablement préparé qui incorpore conjointement deux précurseurs polyisocyanate et macroglycol et avec un allongeur de chaîne de type diamine.

Un inconvénient majeur des polyuréthane-urée synthétisés dans ce document réside dans l'utilisation d'un prépolymère de précurseurs, qui limite la synthèse *in situ* du polyuréthane-urée à l'utilisation d'un élastomère polaire tel que le NBR, et dans le fait que la dispersion obtenue du polyuréthane-urée dans le NBR génère des propriétés mécaniques et notamment dynamiques insuffisantes pour les mélanges NBR/polyuréthane-urée testés, lesquels n'incorporent pas la moindre charge renforçante.

On connaît par ailleurs des polyuréthanes sans isocyanate (« NIPU » en anglais pour « non-isocyanate polyurethanes ») qui ont été récemment développés afin de s'affranchir des problèmes de toxicité et de stabilité des isocyanates et d'anticiper ainsi une réglementation plus contraignante concernant leur utilisation. Ces « NIPU » sont typiquement préparés en faisant réagir des dérivés aminés sur des carbonates cycliques, pour l'obtention de polyhydroxyuréthanes (PHU)» selon le schéma réactionnel ci-dessous :

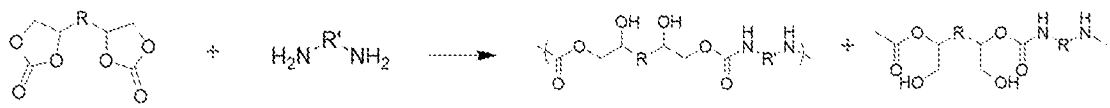

Le document US 9,416,227 B2 divulgue la préparation sans isocyanate de microparticules d'un tel polyhydroxyuréthane.

De manière conventionnelle, le renforcement des élastomères au sein de compositions de caoutchouc est réalisé par ajout de charges telles que le noir de carbone et/ou la silice, afin d'améliorer les propriétés mécaniques des compositions grâce à l'effet hydrodynamique et aux interactions entre l'élastomère et les charges, d'une part, et entre les charges elles-mêmes, d'autre part.

Cependant, ces interactions charges-élastomère et charges-charges génèrent un phénomène indésirable que l'on désigne usuellement sous le nom d'effet Payne et qui se traduit par une non-linéarité (i.e. rigidification en amplitude) et une rigidification notamment aux basses températures des compositions de caoutchouc réticulées soumises à des sollicitations dynamiques. Cette rigidification entraîne des propriétés dynamiques pouvant s'avérer insatisfaisantes pour les compositions du fait des interactions précitées avec les charges renforçantes utilisées, propriétés dynamiques qui de manière usuelle peuvent être évaluées par la mesure, à deux amplitudes de déformations dynamiques, d'un ratio de modules de conservation G' relatifs aux modules complexes de cisaillement G* des compositions. Pour rappel, le module complexe G* est défini par l'équation G* = G' + iG", avec :

G' : partie réelle de G* appelée module de conservation ou élastique, G' caractérisant la rigidité ou le comportement viscoélastique de la composition (i.e. l'énergie conservée et totalement restituée) ; et

G" : partie imaginaire de G* appelée module de perte ou de dissipation, G" caractérisant le comportement visqueux de la composition (i.e. l'énergie dissipée sous forme de chaleur, étant précisé que le rapport G"/G' définit le facteur de perte tan $\delta$).

Ce ratio correspond typiquement à G', mesuré par analyse mécanique dynamique (AMD) à une faible amplitude de déformation dynamique, rapporté à G' mesuré à une amplitude élevée de déformation dynamique, avec les deux modules G' qui sont mesurés à une même fréquence et à une même température (e.g. G' 0,5% / G' 20%). De manière connue, G' 0,5% / G' 20% est usuellement compris entre 1,80 et 2,00 pour une composition de caoutchouc à base d'un

polyisoprène (IR) et renforcée par 40 pce d'un noir de carbone de grade N330 afin d'être utilisable dans des applications dynamiques (pce : parties en poids pour 100 parties d'élastomère(s)). En effet, on sait que dans les matériaux renforcés le comportement viscoélastique varie dès les faibles amplitudes de déformations dynamiques, avec une décroissance sensible de G' avec une augmentation significative de la déformation.

Au cours de ses recherches récentes, la Demanderesse a cherché de manière intensive à minimiser cet effet Payne dans des compositions de caoutchouc réticulées en réduisant au maximum le ratio précité de modules de conservation G' 0,5% / G' 20% pour qu'il soit aussi proche de 1,00 que possible, de sorte que le module de conservation G' à une déformation maximale de 20 % soit à peine plus réduit que celui à une déformation quasiment nulle de 0,5 % sans pénaliser les propriétés statiques des compositions (notamment en termes de modules sécants et de rigidité), de sorte rendre ces compositions particulièrement avantageuses dans des applications dynamiques.

Un but de la présente invention est donc de proposer de nouvelles compositions de caoutchouc qui remédient notamment aux inconvénients précités en améliorant en particulier les propriétés dynamiques des compositions de caoutchouc de l'art antérieur tout en conservant leurs propriétés statiques.

Ce but est atteint en ce que la Demanderesse vient essentiellement de découvrir d'une manière surprenante que si l'on fait réagir par mélangeage thermomécanique un élastomère avec une charge renforçante, des précurseurs d'un polymère à groupes uréthanes et un allongeur de chaîne, puis si l'on réticule le produit de cette réaction, alors on peut obtenir à certaines conditions détaillées ci-dessous une dispersion fine et homogène dans l'élastomère de ce polymère à groupes uréthanes qui est segmenté en étant formé *in situ* dans la matrice élastomère avec, pour la composition obtenue, un effet Payne minimisé et des propriétés statiques conservées, en comparaison d'un mélange réticulé de caoutchouc à base du même élastomère mais dépourvu de polymère à groupes uréthanes et comprenant à la place la même charge renforçante selon une quantité augmentée de la quantité dudit polymère dans la composition.

En d'autres termes, une composition de caoutchouc selon l'invention est à base d'au moins un élastomère et comprend une charge renforçante et un polymère à groupes uréthanes dispersé dans ledit au moins un élastomère, la composition comprenant le produit d'une réaction *in situ* de mélangeage thermomécanique dudit au moins un élastomère avec ladite charge renforçante, des précurseurs dudit polymère à groupes uréthanes et un allongeur de chaîne.

Selon l'invention, la composition, qui est utilisable dans un organe mécanique à fonction dynamique en particulier choisi parmi des supports antivibratoires et des articulations élastiques pour véhicules à moteur ou dispositifs industriels, présente un rapport G' 0,5% / G' 20% de modules de conservation G' relatifs aux modules de cisaillement complexes G* vérifiant l'une au moins des conditions suivantes (i) à (v), G' 0,5% et G' 20% étant mesurés selon la norme ISO 4664 à des amplitudes de déformations dynamiques respectives de 0,5 % et 20 %, sur des éprouvettes de double cisaillement soumises à des déformations en cisaillement de 0,02 % à 50 % à une même fréquence de 5 Hz et à une même température T:

(i) G' 0,5 % / G' 20 % $\leq$ 1,15 pour T = 100° C,
(ii) G' 0,5 % / G' 20 % $\leq$ 1,40 pour T = 65° C,
(iii) G' 0,5 % / G' 20 % $\leq$ 1,50 pour T = 25° C,
(iv) G' 0,5 % / G' 20 % $\leq$ 1,60 pour T = 0° C,
(v) G' 0,5 % / G' 20 % $\leq$ 2,50 pour T = -30° C.

Par « charge renforçante », on entend ici toute charge dispersée en étant très finement divisée dans la matrice élastomère de la composition (i.e. dans ledit au moins un élastomère) et apte à renforcer la composition pour lui conférer notamment des modules sécants, une résistance à la rupture et une rigidité suffisamment élevés, cette charge pouvant comprendre au moins une charge organique telle qu'un noir de carbone suffisamment renforçant pour l'application considérée et/ou au moins une charge inorganique telle qu'une silice suffisamment renforçante pour cette application.

Par « produit d'une réaction *in situ* de mélangeage thermomécanique », on entend ici de manière usuelle le mélange produit par un travail mécanique des ingrédients précités comprenant au moins une étape thermique, au cours duquel on malaxe non seulement ledit au moins un élastomère avec ladite charge renforçante, lesdits précurseurs et ledit allongeur de chaîne, mais de préférence en outre avec d'autres additifs conventionnellement utilisés dans des compositions de caoutchouc tels qu'un complexe activateur (e.g. oxyde de zinc et acide stéarique) et un plastifiant (e.g. une huile), à l'exception du système de réticulation (e.g. un système de vulcanisation comprenant du soufre et des accélérateurs) qui est ajouté au mélange non réticulé obtenu suite à ce mélangeage thermomécanique en vue de l'obtention de la composition selon l'invention, laquelle est finalement réticulée de manière connue, comme expliqué ci-dessous.

On notera qu'une composition de caoutchouc réticulée selon l'invention ainsi obtenue forme des réseaux enchevêtrés comprenant un réseau élastomère réticulé incorporant des segments rigides dudit polymère à groupes uréthanes, et un réseau de renforcement organique comprenant des segments souples de ce polymère, lequel est avantageusement dispersé de manière fine et globalement homogène dans l'élastomère, comme expliqué ci-dessous. La Demanderesse a découvert que cet enchevêtrement particulier de segments respectivement souples et rigides formés

par ce polymère ainsi dispersé permet d'obtenir les conditions précitées (i) à (v) particulièrement avantageuses dont l'une au moins est vérifiée pour ledit rapport G' 0,5% / G' 20%.

On notera également que ces conditions (i) à (v) témoignent d'une minimisation (i.e. réduction significative) de l'effet Payne sur une large plage de températures allant de -30° C à 100° C, en comparaison de l'effet Payne observé pour une composition réticulée conventionnelle dépourvue dudit polymère et comprenant la même charge renforçante mais selon une quantité augmentée de la quantité dudit polymère dans la composition (tous les autres ingrédients étant inchangés).

On notera en outre que dans une composition de caoutchouc selon l'invention, ledit polymère à groupes uréthanes exerce lui aussi une fonction de renforcement de la composition de caoutchouc, avantageusement en complément d'une quantité donnée de ladite charge renforçante que ce polymère peut remplacer en partie, comme démontré dans les exemples de réalisation ci-après qui montrent des propriétés statiques de modules sécants, de résistance à la rupture et de dureté sensiblement conservées.

Avantageusement, la composition de l'invention peut vérifier au moins la condition (i), et de préférence en outre les conditions (ii), (iii), (iv) et (v), et lesdites éprouvettes peuvent être soumises à un conditionnement mécanique préalable de 0 $\pm$ 4 mm, 50 mm/min pendant 8 cycles.

Selon un exemple préférentiel de l'invention, la composition comprend (pce : parties en poids pour 100 parties d'élastomère(s)) de 10 à 40 pce d'un noir de carbone à titre de charge renforçante et de 10 à 50 pce dudit polymère à groupes uréthanes, la composition vérifiant de préférence en outre la condition suivante (i-a):

$$\text{(i-a) } G'\ 0{,}5\% \,/\, G'\ 20\% \leq 1{,}12 \text{ pour } T = 100°\ C.$$

Encore plus préférentiellement, la composition de l'invention comprend de 15 à 30 pce dudit noir de carbone par exemple de grade N330 et de 15 à 30 pce dudit polymère à groupes uréthanes.

Selon un autre aspect de l'invention, ledit polymère à groupes uréthanes peut être dispersé dans ledit au moins un élastomère sous forme de nodules de plus grande dimension transversale (i.e. le diamètre dans le cas de nodules globalement sphériques) moyenne en nombre comprise entre 1 nm et 5 $\mu$m, de préférence entre 50 nm et 2 $\mu$m et encore plus préférentiellement entre 100 nm et 1 $\mu$m.

On notera que cette dispersion dudit polymère dans la matrice élastomère continue de la composition est ainsi avantageusement fine et globalement homogène, ce qui contribue d'une manière significative à l'obtention des propriétés mécaniques précitées des compositions de l'invention incluant notamment leur effet Payne minimisé par la réduction dudit rapport G' 0,5% / G' 20%.

D'une manière générale, les compositions de l'invention peuvent avantageusement présenter en outre :

- l'un au moins des modules sécants M100, M300 et M400 suivants respectivement à 100 %, 300 % et 400 % de déformation, mesurés en traction uni-axiale selon la norme ASTM D 412 :

$$M100 \geq 1{,}5 \text{ MPa},$$

$$M300 \geq 5{,}5 \text{ MPa},$$

et

$$M400 \geq 9{,}5 \text{ MPa ;}$$

et/ou

- une résistance à la rupture R/r, mesurée en traction uni-axiale selon la norme ASTM D 412, d'au moins 26 MPa.

On notera que ces propriétés statiques de la composition sont avantageusement proches de celles présentées par une composition réticulée conventionnelle dépourvue dudit polymère et comprenant la même charge renforçante, telle qu'un noir de carbone par exemple de grade N330, mais selon une quantité augmentée de la quantité dudit polymère dans la composition (tous les autres ingrédients étant inchangés).

Avantageusement, une composition selon l'invention peut présenter une dureté Shore A, mesurée selon la norme ASTM D2240, d'au moins 48 et de préférence comprise entre 50 et 55.

D'une manière générale pour une composition selon l'invention, ledit au moins un élastomère peut avantageusement être un caoutchouc choisi parmi les élastomères diéniques ou non, à l'exception des caoutchoucs silicones, et la composition comprend un système de réticulation par exemple au soufre qui est apte à réagir avec ledit produit de ladite

réaction *in situ* de mélangeage thermomécanique pour co-réticuler ledit au moins un élastomère avec ledit polymère à groupes uréthanes.

De préférence, ledit au moins un élastomère est un élastomère diénique apolaire, étant encore plus préférentiellement choisi parmi le caoutchouc naturel (NR), les polyisoprènes (IR), les polybutadiènes (BR) et les copolymères styrène-butadiène (SBR).

Contrairement à un élastomère diénique polaire tel que le caoutchouc nitrile (NBR) testé dans WO-A1-2015/032681, on notera que l'utilisation d'un élastomère diénique spécifiquement apolaire permet d'obtenir une dispersion améliorée (tant en finesse qu'en homogénéité) dudit polymère à groupes uréthanes dans cet élastomère apolaire, et par conséquent d'améliorer les propriétés dynamiques de la composition en minimisant ledit rapport G' 0,5% / G' 20% et ainsi l'effet Payne observé pour cette composition.

Egalement d'une manière générale pour une composition selon l'invention, ledit polymère à groupes uréthanes est avantageusement segmenté par :

- des segments rigides qui peuvent être présents dans ledit polymère suivant une fraction massique comprise entre 20 % et 40 %, de préférence entre 25 % et 35 %, et qui comprennent ledit allongeur de chaîne et un premier dit précurseur, et par
- des segments souples comprenant un second dit précurseur qui est un polymère diénique à bouts de chaîne fonctionnalisés, de préférence un polybutadiène fonctionnalisé,

ledit polymère à groupes uréthanes étant co-réticulé, via des doubles liaisons dudit second précurseur, avec ledit au moins un élastomère en formant un réseau tridimensionnel relié par des liaisons covalentes audit moins un élastomère.

On notera que cette fraction massique particulière desdits segments rigides dans ledit polymère est préférentielle, du fait qu'elle contribue à minimiser ledit rapport G' 0,5% / G' 20% sans pénaliser les propriétés statiques précitées de la composition de l'invention.

On notera également que la co-réticulation chimique selon l'invention (e.g. co-vulcanisation pour une réticulation au soufre) du polymère à groupes uréthanes avec ledit au moins un élastomère est rendue possible par les doubles liaisons présentes dans ledit second précurseur, et qu'elle permet de mieux renforcer la composition par les liaisons covalentes et de réduire l'effet Payne dans celle-ci, en comparaison d'une composition dans laquelle le polymère à groupes uréthanes ne serait lié à l'élastomère que par des liaisons de faible énergie de type Van der Waals.

Selon un caractéristique préférentielle de l'invention, lesdits premier précurseur et second précurseur forment deux réactifs séparés pour ladite réaction *in situ* de mélangeage thermomécanique avec ledit au moins un élastomère, ladite charge renforçante et ledit allongeur de chaîne, lesdits précurseurs ne formant pas un prépolymère de précurseurs.

En d'autres termes et contrairement à l'utilisation d'un prépolymère de précurseurs dans les exemples de WO-A1-2015/032681 qui limite la dispersion du polyuréthane-urée dans l'élastomère polaire NBR en pénalisant la qualité de cette dispersion, les deux précurseurs selon l'invention sont de préférence séparément ajoutés à l'élastomère pour mettre en œuvre le mélangeage thermomécanique.

On notera que cette réaction séparée dudit au moins un élastomère avec les deux précurseurs séparément ajoutés contribue à améliorer la qualité de la dispersion obtenue dudit polymère à groupes uréthanes dans la matrice élastomère, tant en finesse qu'en homogénéité.

Encore plus préférentiellement, ledit allongeur de chaîne présente une masse molaire inférieure ou égale à 700 g/mol et de préférence inférieure à 600 g/mol.

On notera ainsi que ledit allongeur de chaîne est avantageusement caractérisé par une chaîne courte.

Selon un premier mode de réalisation de l'invention, ledit polymère à groupes uréthanes appartient à la famille des polyuréthanes (PU) obtenus à partir d'un composé isocyanate, à l'exclusion des polyuréthane-urée tels que ceux synthétisés aux exemples de WO-A1-2015/032681.

Conformément à ce premier mode de l'invention :

- ledit premier précurseur peut être un polyisocyanate de fonctionnalité supérieure à 2, de préférence choisi parmi des monomères ou pré-polymères à base de 4,4'-méthylène bis(phényl isocyanate), l'isophorone diisocyanate, l'hexaméthylène diisocyanate et le 4,4'-diisocyanate de diphénylméthylène,
- ledit second précurseur peut être un polymère diénique fonctionnalisé diol de fonctionnalité supérieure à 2, de préférence un polybutadiène hydroxytéléchélique non hydrogéné de masse moléculaire moyenne en nombre comprise entre 1000 et 3000 g/mol et de fonctionnalité égale ou supérieure à 2,2, et
- ledit allongeur de chaîne peut être un polyol choisi parmi les diols et triols qui présente une masse molaire inférieure ou égale à 300 g/mol (polyol à chaîne courte), de préférence choisi parmi le cyclohexane diméthanol, l'isosorbide et le glycérol.

Selon un exemple préférentiel de ce premier mode de l'invention :

- ledit au moins un élastomère est avantageusement un élastomère diénique apolaire de préférence choisi parmi le caoutchouc naturel (NR), les polyisoprènes (IR), les polybutadiènes (BR) et les copolymères styrène-butadiène (SBR),
- ladite charge renforçante comprend un noir de carbone par exemple de grade N330 présent dans la composition selon une quantité comprise entre 15 et 30 pce (pce : parties en poids pour 100 parties d'élastomère(s)),
- ledit polymère à groupes uréthanes est avantageusement présent dans la composition selon une quantité comprise entre 15 et 30 pce, et
- la quantité totale dudit noir de carbone et dudit polymère à groupes uréthanes dans la composition est avantageusement comprise entre 35 et 55 pce.

Conformément à cet exemple préférentiel du premier mode de l'invention, la composition peut avantageusement vérifier la condition suivante (i-a):

$$\text{(i-a) } G'\ 0{,}5\% \,/\, G'\ 20\% \leq 1{,}12 \text{ pour } T = 100°\ C.$$

Selon un second mode de réalisation de l'invention, ledit polymère à groupes uréthanes appartient à la famille des polyhydroxyuréthanes obtenus sans isocyanate (NIPU).

Conformément à ce second mode de l'invention :

- ledit premier précurseur peut être une polyamine choisie parmi les diamines et les triamines, de préférence choisie parmi la 1,3-cyclohexanebis(méthylamine), la xylylène diamine, la 2,2'-(éthylènedioxy)bis(éthylamine) et la tris(2-aminoéthyl)amine,

- ledit second précurseur peut être un polymère diénique fonctionnalisé cyclocarbonate en bouts de chaîne, de préférence un polybutadiène fonctionnalisé par deux cycles carbonates terminaux à 5 ou 6 membres chacun, et
- ledit allongeur de chaîne peut être un carbonate cyclique qui présente une masse molaire inférieure ou égale à 500 g/mol (i.e. à chaine courte), de préférence choisi parmi le cyclohexane bis carbonate, le résorcinol bis carbonate, le glycérol tri carbonate et le phloroglucinol tri carbonate.

Selon un exemple préférentiel de ce second mode de l'invention :

- ledit au moins un élastomère est avantageusement un élastomère diénique apolaire de préférence choisi parmi le caoutchouc naturel (NR), les polyisoprènes (IR), les polybutadiènes (BR) et les copolymères styrène-butadiène (SBR),
- ladite charge renforçante comprend un noir de carbone par exemple de grade N330 présent dans la composition selon une quantité comprise entre 15 et 30 pce (pce : parties en poids pour 100 parties d'élastomère(s)),
- ledit polymère à groupes uréthanes est présent dans la composition selon une quantité comprise entre 15 et 30 pce, et
- la quantité totale dudit noir de carbone et dudit polymère à groupes uréthanes dans la composition est comprise entre 35 et 55 pce.

Conformément à cet exemple préférentiel du second mode de l'invention, la composition peut avantageusement vérifier l'une au moins et de préférence l'ensemble des conditions suivantes (i-a) à (v-a):

(i-a) G' 0,5 % / G' 20 % $\leq$ 1,12 pour T = 100° C,
(ii-a) G' 0,5 % / G' 20 % $\leq$ 1,20 pour T = 65° C,
(iii-a) G' 0,5 % / G' 20 % $\leq$ 1,30 pour T = 25° C,
(iv-a) G' 0,5 % / G' 20 % $\leq$ 1,40 pour T = 0° C,
(v-a) G' 0,5 % / G' 20 % $\leq$ 1,50 pour T = -30° C.

Conformément à cet exemple préférentiel dudit second mode, la composition vérifie en outre encore plus avantageusement l'une au moins et de préférence l'ensemble des conditions suivantes (i-b) à (v-b) :

(i-b) G' 0,5 % / G' 20 % $\leq$ 1,10 pour T = 100° C,
(ii-b) G' 0,5 % / G' 20 % $\leq$ 1,15 pour T = 65° C,
(iii-b) G' 0,5 % / G' 20 % $\leq$ 1,20 pour T = 25° C,
(iv-b) G' 0,5 % / G' 20 % $\leq$ 1,25 pour T = 0° C,
(v-b) G' 0,5 % / G' 20 % $\leq$ 1,40 pour T = -30° C.

Un organe mécanique à fonction dynamique selon l'invention est en particulier choisi parmi des supports antivibratoires et des articulations élastiques pour véhicules à moteur ou dispositifs industriels, ledit organe comprenant au moins une partie élastique qui est constituée d'une composition de caoutchouc telle que définie ci-dessus et qui est adaptée pour être soumise à des sollicitations dynamiques.

Un procédé de préparation selon l'invention d'une composition de caoutchouc telle que définie ci-dessus comprend les étapes suivantes :

a) formation d'un mélange non réticulé comprenant une dispersion, dans ledit au moins un élastomère, dudit polymère à groupes uréthanes par ladite réaction de mélangeage thermomécanique dudit au moins un élastomère avec ladite charge renforçante, lesdits précurseurs et ledit allongeur de chaîne, ladite réaction étant de préférence mise en œuvre dans un mélangeur interne à une température maximale comprise entre 130° C et 180° C,

b) ajout au mélange d'un système de réticulation avec travail mécanique du mélange réticulable ainsi obtenu de préférence réalisé dans un mélangeur ouvert à une température maximale inférieure à 80° C, puis

c) réticulation du mélange réticulable par vulcanisation sous presse à une température comprise entre 130° C et 180° C, de préférence par moulage compression, ledit polymère à groupes uréthanes étant co-réticulé par voie chimique avec ledit au moins un élastomère en formant avec ce dernier des liaisons covalentes.

On notera que cette co-réticulation chimique permet de renforcer de manière satisfaisante la composition obtenue tout en minimisant l'effet Payne dans celle-ci, et que cette co-réticulation est rendue possible par les doubles liaisons que comporte ledit second précurseur et par l'utilisation d'une fonctionnalité supérieure à 2 pour chacun des premier et second précurseurs.

On notera également que le mélangeage thermomécanique de l'étape a) peut comprendre au moins une étape thermique dont les températures minimale à atteindre et maximale à ne pas dépasser peuvent être comprises entre 130° C et 180° C et de préférence entre 140° C et 170° C. La durée appropriée du mélangeage varie en fonction des conditions opératoires retenues par l'homme du métier et en particulier de la température choisie, de la nature et du volume des ingrédients soumis au travail thermomécanique.

De préférence, lesdits précurseurs forment un premier précurseur et un second précurseur qui sont ajoutés séparément à l'étape a) après ledit au moins un élastomère, ledit polymère à groupes uréthanes étant segmenté par des segments rigides comprenant ledit allongeur de chaîne et ledit premier précurseur et par des segments souples comprenant ledit second précurseur.

On notera que l'introduction en premier dudit au moins élastomère (de préférence un élastomère diénique apolaire) dans le mélangeur interne permet de plastifier suffisamment cet élastomère et de faciliter l'incorporation des autres ingrédients ajoutés par la suite à la matrice élastomère.

Encore plus préférentiellement, la fraction massique totale dudit premier précurseur et dudit allongeur de chaîne dans ledit polymère à groupes uréthanes formé à l'étape a) est comprise entre 20 % et 40 %, de préférence entre 25 % et 35 %.

Selon un autre aspect de l'invention, un polymère à groupes uréthanes dispersé dans une composition de caoutchouc à base d'au moins un élastomère par une réaction *in situ* de mélangeage thermomécanique dudit au moins un élastomère avec une charge renforçante, des précurseurs dudit polymère et un allongeur de chaîne, est utilisé pour réduire l'effet Payne dans la composition à une température T inclusivement comprise entre -30° C et 100° C, l'effet Payne étant quantifié par ledit rapport G' 0,5% / G' 20% de modules de conservation G' relatifs aux modules de cisaillement complexes G* de la composition,

en comparaison d'un mélange de caoutchouc à base dudit au moins un élastomère, dépourvu dudit polymère à groupes uréthanes et comprenant ladite charge renforçante selon une quantité en pce égale à la somme des pce, dans la composition, de ladite charge renforçante et dudit polymère à groupes uréthanes.

Selon cette utilisation de l'invention, la composition comprenant (pce : parties en poids pour 100 parties d'élastomère(s)) de 10 à 40 pce d'un noir de carbone à titre de charge renforçante et de 10 à 50 pce dudit polymère à groupes uréthanes, peut être avantageusement utilisée pour réduire ledit rapport G' 0,5% / G' 20% de plus de 40 %, et optionnellement en outre conserver à moins de 15 % près la dureté Shore A de la composition,

en comparaison dudit mélange de caoutchouc dépourvu dudit polymère à groupes uréthanes et comprenant ledit noir de carbone selon une quantité en pce égale à la somme des pce, dans la composition, dudit noir de carbone et dudit polymère.

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :

Pour le premier mode de l'invention (PU) :

La figure 1 est un graphique illustrant les modules sécants M100, M300, M400, la dureté Shore A et le rapport G' 0,5% / G' 20% à 100° C d'un mélange de caoutchouc témoin non renforcé, d'un mélange de l'art antérieur renforcé avec 40 pce de noir de carbone, d'un mélange de caoutchouc non conforme à l'invention qui n'est pas renforcé et comprend 40 pce d'un PU sans allongeur de chaînes (i.e. sans segments rigides, SR ci-après) et d'une composition de caoutchouc non conforme à l'invention qui comprend 20 pce de noir de carbone et 20 pce du PU sans SR,

La figure 2 est un graphique illustrant l'influence de l'ajout d'un allongeur de chaînes glycérol sur M100, M300, M400, la résistance à la rupture R/r, Shore A et G' 0,5% / G' 20% à 100° C, pour ledit mélange de l'art antérieur renforcé avec 40 pce de noir de carbone, un autre mélange de l'art antérieur renforcé avec 20 pce de noir de carbone, ladite composition non conforme à l'invention et une composition I1 selon l'invention avec 20 pce de noir de carbone et 20 pce d'un PU comprenant 30 % en masse de SR,

La figure 2a est un graphique illustrant l'influence de la fonctionnalité et des insaturations du second précurseur sur M100, M300, M400 et R/r, pour un mélange de l'art antérieur avec 40 pce de noir de carbone, deux mélanges non conformes à l'invention avec 20 pce de noir de carbone et 20 pce d'un PU issu d'un premier précurseur selon l'invention mais d'un second précurseur non conforme à l'invention, et une composition I1' selon l'invention avec 20 pce de noir de carbone et 20 pce d'un PU issu du même premier précurseur mais d'un second précurseur selon l'invention,

La figure 3 est un graphique illustrant l'influence, pour des mêmes précurseurs polyisocyanate (Suprasec 2015) et polyol (polyBd R20 LM) que pour la composition I1, de divers allongeurs de chaînes sur M100, M300, M400, R/r, Shore A et G' 0,5% / G' 20% à 100° C, pour le mélange de l'art antérieur renforcé avec 40 pce de noir de carbone, l'autre mélange de l'art antérieur renforcé avec 20 pce de noir de carbone et trois compositions selon l'invention I2, I3, I1 avec 20 pce de noir de carbone et 20 pce de trois PU comprenant 30 % en masse de SR et respectivement obtenus avec des allongeurs de chaînes CHDM, isosorbide et glycérol (voir formules illustrées),

La figure 4 est un graphique illustrant, pour un même allongeur de chaînes CHDM et précurseur polyol (polyBd R20 LM), l'influence de divers précurseurs polyisocyanates sur M100, M300, M400, R/r, Shore A et G' 0,5% / G' 20% à 100° C, pour le mélange de l'art antérieur renforcé avec 40 pce de noir de carbone, l'autre mélange de l'art antérieur renforcé avec 20 pce de noir de carbone, la composition I2 avec le polyisocyanate Suprasec 2015 et trois autres compositions selon l'invention I4, I5, I6 avec 20 pce de noir de carbone et 20 pce de trois autres PU comprenant 30 % en masse de SR mais respectivement obtenus avec des polyisocyanates IPDI, HDI et 4,4'-MDI (voir formules illustrées),

La figure 5 est un graphique illustrant les rapports G' 0,5% / G' 20% obtenus à diverses températures allant de -30° C à 100° C, pour le mélange de l'art antérieur renforcé avec 40 pce de noir de carbone et les compositions I1, I2, I3, 14, I5 et I6,

Les figures 6, 7, 8, 9, 10 sont des clichés au microscope à force atomique (« AFM ») en mode « tapping » respectivement obtenus pour les compositions I2, I3, I1, I4, I5, avec pour chaque composition le cliché de gauche en image topographique et le cliché de droite en image de phase,

Pour le second mode de l'invention (NIPU) :

La figure 11 est un graphique illustrant l'influence, pour un même premier précurseur polyamine (1,3-cyclohexane-bis(méthylamine), CHMA en abrégé) et un même second précurseur polycyclocarbonate (polybutadiène terminé cyclocarbonate), de divers allongeurs de chaînes carbonates cycliques (CC en abrégé ci-après) sur M100, M300, M400, R/r, Shore A et G' 0,5% / G' 20% à 100° C, pour le mélange de l'art antérieur renforcé avec 40 pce de noir de carbone, l'autre mélange de l'art antérieur renforcé avec 20 pce de noir de carbone, et quatre compositions selon l'invention I7, I8, I9, 110 avec 20 pce de noir de carbone et 20 pce de quatre NIPU respectivement obtenus avec les allongeurs cyclohexane bis CC, résorcinol bis CC, glycérol tri CC et phloroglucinol tri CC (voir formules illustrées),

La figure 12 est un graphique illustrant l'influence, pour un même allongeur de chaînes phloroglucinol tri CC et un même second précurseur polycyclocarbonate (polybutadiène terminé cyclocarbonate), de divers premiers précurseurs polyamines sur M100, M300, M400, R/r, Shore A et G' 0,5% / G' 20% à 100° C, pour le mélange de l'art antérieur renforcé avec 40 pce de noir de carbone, l'autre mélange de l'art antérieur renforcé avec 20 pce de noir de carbone, la composition I10 avec l'allongeur CHMA et trois autres compositions selon l'invention I11, I12, I13 avec 20 pce de noir de carbone et 20 pce de trois NIPU respectivement obtenus avec les polyamines xylylène diamine, EDEA et TAEA (voir formules illustrées),

La figure 13 est un graphique illustrant les rapports G' 0,5% / G' 20% obtenus à diverses températures allant de -30° C à 100° C, pour le mélange de l'art antérieur renforcé avec 40 pce de noir de carbone et les compositions I7, I8, I9, I10, I11, I12 et I13, et

Les figures 14, 15, 16, 17, 18, 19 et 20 sont des clichés au microscope à force atomique (« AFM ») en mode « tapping » respectivement obtenus pour les compositions I7, 18, I9, I10, I11, I12 et I13 avec pour chaque composition le cliché de gauche en image topographique et le cliché de droite en image de phase.

Dans tous ces exemples de mélanges et de compositions ainsi illustrés, on a utilisé comme matrice élastomère un même polyisoprène de synthèse de dénomination IR Nipol 2200, du noir de carbone N330 à titre de charge renforçante et les ingrédients identifiés dans les tableaux ci-après (exprimées en pce : parts en poids pour 100 parts d'IR).

Pour le premier mode de l'invention illustré aux figures 1 à 10, on a obtenu *in situ* les PU avec les premier et second précurseurs suivants pour les compositions selon l'invention I1, I2, I3 :

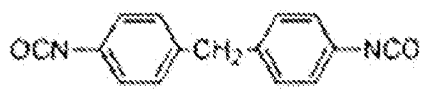

Prépolymère à base de MDI (4,4'-methylene bis(phenyl isocyanate)
Suprasec 2015 – Huntsman
- Fonctionnalité 2,2
- %NCO = 27,4

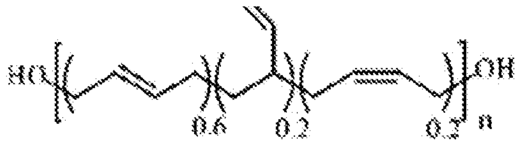

Polybutadiène hydroxytéléchélique
PolyBd R20 LM
- Fonctionnalité 2,2
- Masse molaire 1200 g/mol

Les PU des compositions selon l'invention I4, I5 et I6 ont été obtenus avec le même second précurseur PolyBd R20 LM mais avec les autres premiers précurseurs IPDI, HDI et 4,4'-MDI de formules illustrées à la figure 4.

Pour le second mode de l'invention illustré aux figures 11 à 20, on a obtenu *in situ* les NIPU avec les premier et second précurseurs suivants pour les compositions selon l'invention I7, I8, I9, 110 :

- 1,3-cyclohexanebis(méthylamine) (cf. cyclohexane amine dans les tableaux ci-dessous ou CHMA en abrégé), et
- polybutadiène terminé cyclocarbonate (PolyBd-CC en abrégé).

Les NIPU des compositions I11, I12, I13 ont été obtenus avec le même second précurseur mais avec les autres premiers précurseurs xylylène diamine, EDEA et TAEA de formules illustrées à la figure 12.

Concernant le procédé mis en œuvre pour l'obtention de l'ensemble des compositions selon l'invention I1 à I13, on a suivi le protocole expérimental suivant.

On a réalisé les mélanges polyisoprène/ polymère à groupes uréthanes (PU ou NIPU) à l'aide d'un mélangeur interne Haake pour l'étape de mélangeage thermomécanique, puis d'un mélangeur ouvert à cylindres Polymix pour l'incorporation au mélange obtenu du système de réticulation.

Au sein du mélangeur interne, on a introduit l'élastomère en premier afin qu'il puisse se plastifier et pour faciliter l'incorporation des autres ingrédients. La température de consigne était alors de 55° C et la vitesse des rotors de 45 tours par minute. Après 1,5 minute de mélangeage, on a ajouté le complexe activateur constitué d'acide stéarique et de ZnO (silox 3C), l'huile (Plaxolène 50) et le noir de carbone N330. Une minute après, on a introduit dans le mélangeur interne les premier et second précurseurs. Ces deux précurseurs étant liquides, le couple mécanique de mélangeage a fortement chuté à leur incorporation, et il a donc fallu attendre la formation du PU ou du NIPU afin que ce couple mécanique augmente à nouveau. On a ensuite échauffé la matière par augmentation de la vitesse des rotors présents au sein du mélangeur Haake, puis on a récupéré le mélange lorsqu'il a atteint 150° C.

On a ensuite ajouté le système de réticulation sur le mélangeur ouvert Polymix, la température des cylindres ayant été fixée à 40° C. Puis on a réalisé la vulcanisation des compositions réticulables obtenues par moulage-compression sous une presse hydraulique à 150° C.

Pour la mesure des propriétés statiques des compositions incluant les modules sécants M100, M300, M400, la résistance à la rupture R/r, (successivement présentés de gauche à droite pour chaque matériau sur les graphiques joints) et la dureté Shore A, on a réalisé des essais de traction uniaxiale suivant la norme ISO 37: à 23° C sur un dynamomètre Instron 5565 avec une cellule de force de 10 kN et avec une vitesse de déplacement de la traverse de 500 mm/min. Les éprouvettes haltères utilisées étaient de type H2 (longueur utile = 25 mm, largeur = 4 mm, épaisseur = 2 mm).

Pour la mesure des propriétés dynamiques des compositions et notamment dudit rapport G' 0,5% / G' 20%

représentatif de l'effet Payne des divers mélanges et compositions de caoutchouc, on a procédé à différentes températures (-30, 0, 25, 65 et 100° C) sur une machine DMA+1000 de Metravib. Pour cela, on a utilisé des éprouvettes double cisaillement ½ QC que l'on a soumises à une déformation en cisaillement allant de 0,02 % à 50 % à une fréquence de 5 Hz. On a réalisé un conditionnement mécanique (0±4 mm, 50 mm/min, 8 cycles) au préalable. On a suivi la norme ISO4664 de 2005 (confirmée en 2011) pour les mesures de ces modules de conservation G'.

**Premier mode de l'invention (PU)** :

Tableau 1 : Mélange de caoutchouc témoin non renforcé

| Composé | Parts | Masse volumique (g/mL) | Volume (mL) | Masse (g) |
|---|---|---|---|---|
| IR Nipol 2200 | 100,00 | 0,92 | 108,70 | 228,48 |
| ZnO 2(silox 3C) 141000 | 5,00 | 5,6 | 0,89 | 11,42 |
| Acide stéarique 141500 | 1,00 | 0,85 | 1,18 | 2,28 |
| Huile plaxolène 50 | 3,00 | 0,9 | 3,33 | 6,85 |
| Acc CBS 80% 140130 | 1,40 | 1,22 | 1,15 | 3,20 |
| Rhenogran CLD/80 143910 | 0,6 | 1,199 | 0,50 | 1,37 |
| Soufre M300 | 1,4 | 2,07 | 0,68 | 3,20 |
| | | | | |
| **Total** | 112,40 | 0,97 | 116,42 | 256,81 |

Tableau 2 : Mélange de l'art antérieur renforcé avec 40 pce de noir de carbone

| Composé | Parts | Masse volumique (g/mL) | Volume (mL) | Masse (g) |
|---|---|---|---|---|
| IR Nipol 2200 | 100,00 | 0,92 | 108,70 | 192,20 |
| ZnO 2(silox 3C) 141000 | 5,00 | 5,6 | 0,89 | 9,61 |
| Acide stéarique 141500 | 1,00 | 0,85 | 1,18 | 1,92 |
| N330 155004 | 40 | 1,82 | 21,98 | 76,88 |
| Huile plaxolène 50 | 3,00 | 0,90 | 3,33 | 5,77 |
| Acc CBS 80% 140130 | 1,4 | 1,22 | 1,15 | 2,69 |
| Rhenogran CLD/80 143910 | 0,60 | 1,20 | 0,50 | 1,15 |
| Soufre M300 | 1,4 | 2,07 | 0,68 | 2,69 |
| | | | | |
| **Total** | 152,40 | 1,10 | 138,40 | 292,91 |

Tableau 3 : Mélange de l'art antérieur avec 20 pce de noir de carbone

| Composé | Parts | Masse volumique (g/mL) | Volume (mL) | Masse (g) |
|---|---|---|---|---|
| IR Nipol 2200 | 100,00 | 0,92 | 108,70 | 208,77 |
| ZnO 2(silox 3C) 141000 | 5,00 | 5,6 | 0,89 | 10,44 |
| Acide stéarique 141500 | 1,00 | 0,85 | 1,18 | 2,09 |
| N330 155004 | 20 | 1,82 | 10,99 | 41,75 |
| Huile plaxolène 50 | 3,00 | 0,90 | 3,33 | 6,26 |
| Acc CBS 80% 140130 | 1,4 | 1,22 | 1,15 | 2,92 |
| Rhenogran CLD/80 143910 | 0,60 | 1,20 | 0,50 | 1,25 |

(suite)

| Composé | Parts | Masse volumique (g/mL) | Volume (mL) | Masse (g) |
|---|---|---|---|---|
| Soufre M300 | 1,4 | 2,07 | 0,68 | 2,92 |
| | | | | |
| **Total** | 132,40 | 1,04 | 127,41 | 276,41 |

Tableau 4 : Mélange de caoutchouc non conforme à l'invention (non renforcé, avec 40 pce d'un PU issu de PolyBd R20 LM et de Suprasec 2015, sans allongeur de chaînes):

| Composé | Parts | Masse volumique (g/mL) | Volume (mL) | Masse (g) |
|---|---|---|---|---|
| IR Nipol 2200 | 100,00 | 0,92 | 108,70 | 165,66 |
| ZnO 2(silox 3C) 141000 | 5,00 | 5,6 | 0,89 | 8,28 |
| Acide stéarique 141500 | 1,00 | 0,85 | 1,18 | 1,66 |
| N330 155004 | 0 | 1,82 | 0,00 | 0,00 |
| PolyBd R20 LM | 31,22 | 0,90 | 34,69 | 51,72 |
| MDI Suprasec 2015 | 8,78 | 1,23 | 7,14 | 14,54 |
| CHDM | 0,00 | 1,04 | 0,00 | 0,00 |
| Huile plaxolène 50 | 3,00 | 0,9 | 3,33 | 4,97 |
| Acc CBS 80% 140130 | 2,80 | 1,22 | 2,30 | 4,64 |
| Rhenogran CLD/80 143910 | 1,2 | 1,199 | 1,00 | 1,99 |
| Soufre M300 | 2,8 | 2,07 | 1,35 | 4,64 |
| | | | | |
| **Total** | 155,80 | 0,97 | 160,57 | 258,09 |

Tableau 5 : Composition de caoutchouc non conforme à l'invention (avec 20 pce de noir de carbone et 20 pce de PU issu de PolyBd R20 LM et de Suprasec 2015, sans allongeur de chaînes) :

| Composé | Parts | Masse volumique (g/mL) | Volume (mL) | Masse (g) |
|---|---|---|---|---|
| IR Nipol 2200 | 100,00 | 0,92 | 108,70 | 177,67 |
| ZnO 2(silox 3C) 141000 | 5,00 | 5,6 | 0,89 | 8,88 |
| Acide stéarique 141500 | 1,00 | 0,85 | 1,18 | 1,78 |
| N330 155004 | 20 | 1,82 | 10,99 | 35,53 |
| PolyBd R20 LM | 15,61 | 0,90 | 17,34 | 27,73 |
| MDI Suprasec 2015 | 4,39 | 1,23 | 3,57 | 7,80 |
| CHDM | 0,00 | 1,04 | 0,00 | 0,00 |
| Huile plaxolène 50 | 3,00 | 0,9 | 3,33 | 5,33 |
| Acc CBS 80% 140130 | 2,24 | 1,22 | 1,84 | 3,98 |
| Rhenogran CLD/80 143910 | 0,96 | 1,199 | 0,80 | 1,71 |
| Soufre M300 | 2,24 | 2,07 | 1,08 | 3,98 |
| | | | | |
| **Total** | 154,44 | 1,03 | 149,72 | 274,39 |

Tableau 6 : Composition de caoutchouc 12 selon l'invention (avec 20 pce de noir de carbone et 20 pce de PU issu de PolyBd R20 LM et de Suprasec 2015, avec allongeur de chaînes CHDM) :

| Composé | Parts | Masse volumique (g/mL) | Volume (mL) | Masse (g) |
|---|---|---|---|---|
| IR Nipol 2200 | 100,00 | 0,92 | 108,70 | 178,99 |
| ZnO 2(silox 3C) 141000 | 5,00 | 5,6 | 0,89 | 8,95 |
| Acide stéarique 141500 | 1,00 | 0,85 | 1,18 | 1,79 |
| N330 155004 | 20 | 1,82 | 10,99 | 35,80 |
| PolyBd R20 LM | 10,93 | 0,90 | 12,14 | 19,56 |
| MDI Suprasec 2015 | 7,15 | 1,23 | 5,82 | 12,80 |
| CHDM | 1,92 | 1,04 | 1,85 | 3,43 |
| Huile plaxolène 50 | 3,00 | 0,9 | 3,33 | 5,37 |
| Acc CBS 80% 140130 | 2,24 | 1,22 | 1,84 | 4,01 |
| Rhenogran CLD/80 143910 | 0,96 | 1,199 | 0,80 | 1,72 |
| Soufre M300 | 2,24 | 2,07 | 1,08 | 4,01 |
| | | | | |
| **Total** | 154,44 | 1,04 | 148,61 | 276,44 |

Tableau 7 : Composition de caoutchouc I6 selon l'invention (avec 20 pce de noir de carbone et 20 pce de PU issu de PolyBd R20 LM et de 4,4' MDI, avec allongeur de chaînes CHDM) :

| Composé | Parts | Masse volumique (g/mL) | Volume (mL) | Masse (g) |
|---|---|---|---|---|
| IR Nipol 2200 | 100,00 | 0,92 | 108,70 | 178,51 |
| ZnO 2(silox 3C) 141000 | 5,00 | 5,6 | 0,89 | 8,93 |
| Acide stéarique 141500 | 1,00 | 0,85 | 1,18 | 1,79 |
| N330 155004 | 20 | 1,82 | 10,99 | 35,70 |
| PolyBd R20 LM | 11,39 | 0,90 | 12,65 | 20,33 |
| MDI Aldrich | 6,42 | 1,18 | 5,44 | 11,45 |
| CHDM | 2,19 | 1,04 | 2,11 | 3,92 |
| Huile plaxolène 50 | 3,00 | 0,9 | 3,33 | 5,36 |
| Acc CBS 80% 140130 | 2,24 | 1,22 | 1,84 | 4,00 |
| Rhenogran CLD/80 143910 | 0,96 | 1,199 | 0,80 | 1,71 |
| Soufre M300 | 2,24 | 2,07 | 1,08 | 4,00 |
| | | | | |
| **Total** | 154,44 | 1,04 | 149,01 | 275,70 |

Tableau 8 : Composition de caoutchouc 14 selon l'invention (avec 20 pce de noir de carbone et 20 pce de PU issu de PolyBd R20 LM et de IPDI, avec allongeur de chaînes CHDM) :

| Composé | Parts | Masse volumique (g/mL) | Volume (mL) | Masse (g) |
|---|---|---|---|---|
| IR Nipol 2200 | 100,00 | 0,92 | 108,70 | 177,73 |
| ZnO 2(silox 3C) 141000 | 5,00 | 5,6 | 0,89 | 8,89 |
| Acide stéarique 141500 | 1,00 | 0,85 | 1,18 | 1,78 |
| N330 155004 | 20 | 1,82 | 10,99 | 35,55 |
| PolyBd R20 LM | 11,63 | 0,90 | 12,92 | 20,67 |

(suite)

| Composé | Parts | Masse volumique (g/mL) | Volume (mL) | Masse (g) |
|---|---|---|---|---|
| IPDI | 6,01 | 1,06 | 5,67 | 10,68 |
| CHDM | 2,36 | 1,04 | 2,27 | 4,20 |
| Huile plaxolène 50 | 3,00 | 0,9 | 3,33 | 5,33 |
| Acc CBS 80% 140130 | 2,24 | 1,22 | 1,84 | 3,98 |
| Rhenogran CLD/80 143910 | 0,96 | 1,199 | 0,80 | 1,71 |
| Soufre M300 | 2,24 | 2,07 | 1,08 | 3,98 |
| | | | | |
| **Total** | 154,44 | 1,03 | 149,67 | 274,48 |

Tableau 9 : Composition de caoutchouc I5 selon l'invention (avec 20 pce de noir de carbone et 20 pce de PU issu de PolyBd R20 LM et de HDI, avec allongeur de chaînes CHDM) :

| Composé | Parts | Masse volumique (g/mL) | Volume (mL) | Masse (g) |
|---|---|---|---|---|
| IR Nipol 2200 | 100,00 | 0,92 | 108,70 | 177,56 |
| ZnO 2(silox 3C) 141000 | 5,00 | 5,6 | 0,89 | 8,88 |
| Acide stéarique 141500 | 1,00 | 0,85 | 1,18 | 1,78 |
| N330 155004 | 20 | 1,82 | 10,99 | 35,51 |
| PolyBd R20 LM | 12,13 | 0,90 | 13,48 | 21,54 |
| HDI | 5,10 | 1,05 | 4,86 | 9,06 |
| CHDM | 2,77 | 1,04 | 2,66 | 4,92 |
| Huile plaxolène 50 | 3,00 | 0,9 | 3,33 | 5,33 |
| Acc CBS 80% 140130 | 2,24 | 1,22 | 1,84 | 3,98 |
| Rhenogran CLD/80 143910 | 0,96 | 1,199 | 0,80 | 1,70 |
| Soufre M300 | 2,24 | 2,07 | 1,08 | 3,98 |
| | | | | |
| **Total** | 154,44 | 1,03 | 149,80 | 274,23 |

Tableau 10 : Composition de caoutchouc 13 selon l'invention (avec 20 pce de noir de carbone et 20 pce de PU issu de PolyBd R20 LM et de Suprasec 2015, avec allongeur de chaînes isosorbide) :

| Composé | Parts | Masse volumique (g/mL) | Volume (mL) | Masse (g) |
|---|---|---|---|---|
| IR Nipol 2200 | 100,00 | 0,92 | 108,70 | 179,44 |
| ZnO 2(silox 3C) 141000 | 5,00 | 5,6 | 0,89 | 8,97 |
| Acide stéarique 141500 | 1,00 | 0,85 | 1,18 | 1,79 |
| N330 155004 | 20 | 1,82 | 10,99 | 35,89 |
| PolyBd R20 LM | 10,93 | 0,90 | 12,14 | 19,61 |
| MDI Suprasec 2015 | 7,14 | 1,23 | 5,80 | 12,80 |
| Isosorbide | 1,94 | 1,30 | 1,49 | 3,47 |
| Huile plaxolène 50 | 3,00 | 0,9 | 3,33 | 5,38 |
| Acc CBS 80% 140130 | 2,24 | 1,22 | 1,84 | 4,02 |
| Rhenogran CLD/80 143910 | 0,96 | 1,199 | 0,80 | 1,72 |
| Soufre M300 | 2,24 | 2,07 | 1,08 | 4,02 |

(suite)

| Composé | Parts | Masse volumique (g/mL) | Volume (mL) | Masse (g) |
|---|---|---|---|---|
| | | | | |
| **Total** | 154,44 | 1,04 | 148,24 | 277,13 |

Tableau 11 : Composition de caoutchouc I1 selon l'invention (avec 20 pce de noir de carbone et 20 pce de PU issu de PolyBd R20 LM et de Suprasec 2015, avec allongeur de chaînes glycérol) :

| Composé | Parts | Masse volumique (g/mL) | Volume (mL) | Masse (g) |
|---|---|---|---|---|
| IR Nipol 2200 | 100,00 | 0,92 | 108,70 | 179,36 |
| ZnO 2(silox 3C) 141000 | 5,00 | 5,6 | 0,89 | 8,97 |
| Acide stéarique 141500 | 1,00 | 0,85 | 1,18 | 1,79 |
| N330 155004 | 20 | 1,82 | 10,99 | 35,87 |
| PolyBd R20 LM | 10,93 | 0,90 | 12,14 | 19,60 |
| MDI Suprasec 2015 | 8,07 | 1,23 | 6,56 | 14,48 |
| Glycérol | 1,00 | 1,26 | 0,79 | 1,79 |
| Huile plaxolène 50 | 3,00 | 0,9 | 3,33 | 5,38 |
| Acc CBS 80% 140130 | 2,24 | 1,22 | 1,84 | 4,02 |
| Rhenogran CLD/80 143910 | 0,96 | 1,199 | 0,80 | 1,72 |
| Soufre M300 | 2,24 | 2,07 | 1,08 | 4,02 |
| | | | | |
| **Total** | 154,44 | 1,04 | 148,30 | 277,00 |

Comme visible à la figure 1, le mélange non renforcé avec 40 pce de PU synthétisé *in situ* présente des modules améliorés en comparaison du mélange non renforcé sans PU, sans atteindre toutefois le niveau des modules du mélange avec 40 pce de noir de carbone. L'effet Payne de ce mélange non renforcé avec 40 pce de PU est toutefois très réduit comparé à celui du mélange avec 40 pce de noir de carbone à la place du PU. La composition non conforme de l'invention avec un « renfort mixte » noir de carbone + PU synthétisé *in situ* sans SR permet d'obtenir de meilleures propriétés statiques tout en ayant un effet Payne équivalent à celui du mélange non renforcé avec 40 pce de PU (cf. rapport G' 0,5% / G' 20% de 1,05 très inférieur à celui égal à 1,94 pour le mélange avec 40 pce de noir de carbone).

Comme visible à la figure 2, l'ajout d'un allongeur de chaînes permet d'améliorer encore les propriétés statiques par la formation de segments rigides (SR) au sein du PU synthétisé *in situ,* en augmentant notamment les modules et la dureté des compositions. Avec un taux massique de SR de 30 %, la composition I1 montre que le même niveau de dureté est atteint que pour le mélange de référence (chargé avec 40 pce de noir de carbone), avec en outre un effet Payne fortement réduit par rapport à ce mélange de référence (cf. rapport G' 0,5% / G' 20% de 1,08).

Comme visible à la figure 3, le choix de la structure de l'allongeur de chaînes choisi, et donc de la nature des segments rigides obtenus dans la matrice élastomère, permet de moduler les propriétés mécaniques des compositions I1, I2 et I3, pour un même polyisocyanate (Suprasec 2015) et un même taux de SR de 30 %, tout en ayant des duretés proches ou équivalentes de celle dudit mélange de référence ainsi que de faibles effets Payne (cf. les rapports G' 0,5% / G' 20% à 100° C toujours inférieurs à 1,12, voire inférieurs ou égaux à 1,10).

Comme visible à la figure 4, le choix de la structure du polyisocyanate (pour un même allongeur de chaînes CHDM) permet également de moduler les propriétés mécaniques des compositions I2, I4, I5 et I6. L'effet Payne à 100° C reste faible pour I2, I4, I5, I6 (cf. rapport G' 0,5% / G' 20% inférieur ou égal à 1,12) et bien inférieur à celui dudit mélange de référence.

Comme visible à la figure 5 qui montre les propriétés dynamiques des compositions I1 à I6 mesurées à différentes températures (à -30° C, 0° C, 25° C, 65° C et 100°C), l'effet Payne est considérablement réduit pour ces compositions I1 à I6 en comparaison dudit mélange de référence.

En conclusion, les résultats précités démontrent que les propriétés dynamiques des compositions selon ce premier mode de l'invention sont nettement améliorées par rapport à l'art antérieur représenté par ledit mélange de référence (avec 40 pce de noir de carbone et sans PU), ce qui permet avantageusement de mettre en œuvre ces compositions dans des applications dynamiques et dans une large gamme de températures allant de -30° C à 100° C.

Les figures 6 à 10 montrent que les PU ainsi obtenus *in situ* sont très finement dispersés de manière relativement homogène dans le polyisoprène sous forme de nodules de plus grande dimension transversale moyenne en nombre comprise entre 50 nm et 2 μm, voire entre 100 nm et 1 μm. Cette dispersion contribue à l'obtention des propriétés mécaniques précitées des compositions de l'invention incluant notamment leur effet Payne minimisé.

En résumé, le renforcement chimique de la matrice élastomère par des réseaux de PU ainsi enchevêtrés permet de maintenir les propriétés mécaniques (modules et dureté) des compositions I1 à I6 par rapport audit mélange de référence, et en minimisant la non-linéarité (rigidification dynamique) par rapport à ce dernier.

On a par ailleurs étudié l'influence de la fonctionnalité et des insaturations éthyléniques du second précurseur sur les propriétés mécaniques obtenues pour les compositions, à partir d'un même mélange maître donné dont la formulation est celle du mélange de caoutchouc témoin non renforcé détaillée au tableau 1 ci-dessus, en préparant :

- Un mélange témoin de caoutchouc de l'art antérieur renforcé avec 40 pce du noir de carbone N330 ajouté au mélange maître ;
- Une composition I1' selon l'invention avec en plus du mélange maître, 20 pce du noir de carbone N330 et 20 pce d'un PU issu du premier précurseur MDI « Suprasec 2015 », d'un polybutadiène hydroxytéléchélique de dénomination « PolyBd-OH R45 HTLO » à titre de second précurseur (Mn = 2800 g/mol, fonctionnalité = 2,5) et du CHDM précité à titre d'allongeur de chaîne ;
- Un mélange n°1 de caoutchouc non conforme à l'invention avec en plus du mélange maître, 20 pce du noir de carbone N330 et 20 pce d'un PU issu du premier précurseur MDI « Suprasec 2015 », du CHDM comme allongeur de chaîne et du polybutadiène hydroxytéléchélique « Krasol LBH 2000 » (de Mn = 2100 g/mol et de fonctionnalité égale à 1,9) à titre de second précurseur ; et
- Un mélange n°2 de caoutchouc non conforme à l'invention avec en plus du mélange maître, 20 pce du noir de carbone N330 et 20 pce d'un PU issu du premier précurseur MDI « Suprasec 2015 », du CHDM comme allongeur de chaîne et du polybutadiène hydrogéné hydroxytéléchélique « Krasol HLBH-P 2000 » (de Mn = 2100 g/mol et de fonctionnalité égale à 1,9) à titre de second précurseur.

La composition I1' et les trois mélanges précités ont été préparés comme indiqué ci-dessus avec 1,6 équivalents d'agents vulcanisants à titre de système de réticulation (voir tableau 1) et avec un PU comprenant 30 % de segments rigides SR, comme expliqué ci-dessus pour les compositions I1 à I6. Le tableau 12 ci-après résume les formulations utilisées à partir du mélange maître pour I1' et les mélanges n°1 et n°2.

Tableau 12 : Composition I1' selon l'invention et mélanges n°1 et 2 (avec 20 pce de noir de carbone et 20 pce de PU issu de Suprasec 2015 et de divers polybutadiènes-OH, avec allongeur de chaînes CHDM) :

| Composés | Composition I1' | Mélange n°1 | Mélange n°2 |
|---|---|---|---|
| Mélange maître | 134,44 | 134,44 | 134,44 |
| PolyBd R45 HTLO | 12,31 | - | - |
| Krasol LBH 2000 | - | 12,29 | - |
| Krasol HLBH-P 2000 | - | - | 12,29 |
| MDI Suprasec 2015 | 5,78 | 5,80 | 5,80 |
| CHDM | 1,91 | 1,91 | 1,91 |

Comme visible à la figure 2a, le second précurseur Krasol LBH 2000 confère au mélange n°1 des modules en traction nettement inférieurs à ceux de la composition I1' dont le second précurseur polyol (tout comme le premier précurseur) présente une fonctionnalité supérieure à 2, alors que la masse moléculaire Mn du Krasol LBH 2000 est inférieure à celle du PolyBd R45 HTLO. Malgré des segments souples plus courts, on a en effet obtenu des propriétés mécaniques moins bonnes pour ce mélange n°1 dans lequel le PU formé est linéaire, ce qui démontre l'effet positif de la fonctionnalité de 2,5 du second précurseur polyol qui permet, via les doubles liaisons de ce dernier, de co-réticuler chimiquement le PU formé avec la matrice élastomère de la composition I1' en conférant à ce PU une structure tridimensionnelle renforçant mieux la composition.

On voit également à la figure 2a que le second précurseur hydrogéné Krasol HLBH-P 2000, dépourvu de double liaisons, confère au mélange n°2 des propriétés mécaniques encore inférieures à celles du mélange n°1. En effet, l'absence de doubles liaisons dans ce second précurseur s'oppose à la co-vulcanisation du PU avec le polyisoprène (le PU formé dans le mélange n°2 étant également linéaire) et donc ne génère aucune liaison covalente entre le PU et la matrice élastomère du mélange, ce qui conduit à un renforcement moindre de ce dernier.

On a mesuré à 100° C comme indiqué ci-dessus l'effet Payne obtenu pour le mélange de l'art antérieur avec 40 pce de N330, pour les mélanges n°1 et n°2 et pour la composition I1' (voir tableau 13 ci-après).

Tableau 13 :

| | Mélange témoin | Composition I1' | Mélange n°1 | Mélange n°2 |
|---|---|---|---|---|
| G' 0,5% (kPa) | 1928 | 850 | 894 | 786 |
| G' 0,5% / G' 20% | 1,81 | 1,07 | 1,25 | 1,20 |

Comme visible au tableau 13, l'effet Payne est plus élevé avec les mélanges n°1 et n°2 incorporant chacun un PU linéaire. Il est en effet plus aisé de rompre lors d'une sollicitation dynamique les liaisons de faible énergie entre les chaînes du PU linéaire des mélanges n°1 et n°2 que de rompre le réseau tridimensionnel du PU co-réticulé de la composition I1'.

Les propriétés intrinsèques du second précurseur (notamment sa fonctionnalité et ses doubles liaisons) sont donc déterminantes pour l'obtention des propriétés mécaniques visées de la composition.

**Second mode de l'invention (NIPU)** :

Tableau 14 : Composition de caoutchouc I7 selon l'invention (avec 20 pce de noir de carbone et 20 pce de NIPU issu de PolyBd-CC et 1,3-cyclohexanebis(methylamine), avec allongeur cyclohexane bis CC) :

| Composé | Parts | Masse volumique (g/mL) | Volume (mL) | Masse (g) |
|---|---|---|---|---|
| IR Nipol 2200 | 100,00 | 0,92 | 108,70 | 177,08 |
| ZnO 2(silox 3C) 141000 | 5,00 | 5,6 | 0,89 | 8,85 |
| Acide stéarique 141500 | 1,00 | 0,85 | 1,18 | 1,77 |
| N330 155004 | 20 | 1,82 | 10,99 | 35,42 |
| PolyBd-CC | 10,87 | 0,90 | 12,08 | 19,25 |
| Cyclohexane amine | 3,45 | 0,945 | 3,65 | 6,11 |
| Cyclohexane bis CC | 5,68 | 1,00 | 5,68 | 10,06 |
| Huile plaxolène 50 | 3,00 | 0,9 | 3,33 | 5,31 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| **Total** | 154,44 | 1,03 | 150,21 | 273,48 |

Tableau 15 : Composition de caoutchouc I8 selon l'invention (avec 20 pce de noir de carbone et 20 pce de NIPU issu de PolyBd-CC et 1,3-cyclohexanebis(methylamine), avec allongeur résorcinol bis CC) :

| Composé | Parts | Masse volumique (g/mL) | Volume (mL) | Masse (g) |
|---|---|---|---|---|
| IR Nipol 2200 | 100,00 | 0,92 | 108,70 | 177,07 |
| ZnO 2(silox 3C) 141000 | 5,00 | 5,6 | 0,89 | 8,85 |
| Acide stéarique 141500 | 1,00 | 0,85 | 1,18 | 1,77 |
| N330 155004 | 20 | 1,82 | 10,99 | 35,41 |
| PolyBd-CC | 10,87 | 0,90 | 12,08 | 19,25 |
| Cyclohexane amine | 3,56 | 0,945 | 3,77 | 6,30 |
| Resorcinol bis CC | 5,57 | 1,00 | 5,57 | 9,86 |
| Huile plaxolène 50 | 3,00 | 0,9 | 3,33 | 5,31 |

(suite)

| Composé | Parts | Masse volumique (g/mL) | Volume (mL) | Masse (g) |
|---|---|---|---|---|
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| **Total** | 154,44 | 1,03 | 150,22 | 273,47 |

Tableau 16 : Composition de caoutchouc I9 selon l'invention (avec 20 pce de noir de carbone et 20 pce de NIPU issu de PolyBd-CC et 1,3-cyclohexanebis(methylamine), avec allongeur glycérol tri CC) :

| Composé | Parts | Masse volumique (g/mL) | Volume (mL) | Masse (g) |
|---|---|---|---|---|
| IR Nipol 2200 | 100,00 | 0,92 | 108,70 | 177,07 |
| ZnO 2(silox 3C) 141000 | 5,00 | 5,6 | 0,89 | 8,85 |
| Acide stéarique 141500 | 1,00 | 0,85 | 1,18 | 1,77 |
| N330 155004 | 20 | 1,82 | 10,99 | 35,41 |
| PolyBd-CC | 10,87 | 0,90 | 12,08 | 19,25 |
| Cyclohexane amine | 3,72 | 0,945 | 3,94 | 6,59 |
| Glycérol tri CC | 5,40 | 1,00 | 5,40 | 9,56 |
| Huile plaxolène 50 | 3,00 | 0,9 | 3,33 | 5,31 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| **Total** | 154,43 | 1,03 | 150,22 | 273,45 |

Tableau 17 : Composition de caoutchouc 110 selon l'invention (avec 20 pce de noir de carbone et 20 pce de NIPU issu de PolyBd-CC et 1,3-cyclohexanebis(methylamine), avec allongeur phloroglucinol tri CC) :

| Composé | Parts | Masse volumique (g/mL) | Volume (mL) | Masse (g) |
|---|---|---|---|---|
| IR Nipol 2200 | 100,00 | 0,92 | 108,70 | 177,08 |
| ZnO 2(silox 3C) 141000 | 5,00 | 5,6 | 0,89 | 8,85 |
| Acide stéarique 141500 | 1,00 | 0,85 | 1,18 | 1,77 |
| N330 155004 | 20 | 1,82 | 10,99 | 35,42 |
| PolyBd-CC | 10,87 | 0,90 | 12,08 | 19,25 |
| Cyclohexane amine | 3,50 | 0,945 | 3,70 | 6,20 |
| Phloroglucinol tri CC | 5,63 | 1,00 | 5,63 | 9,97 |
| Huile plaxolène 50 | 3,00 | 0,9 | 3,33 | 5,31 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| **Total** | 154,44 | 1,03 | 150,22 | 273,48 |

Tableau 18 : Composition de caoutchouc 111 selon l'invention (avec 20 pce de noir de carbone et 20 pce de NIPU issu de PolyBd-CC et xylylène diamine, avec allongeur phloroglucinol tri CC) :

| Composé | Parts | Masse volumique (g/mL) | Volume (mL) | Masse (g) |
|---|---|---|---|---|
| IR Nipol 2200 | 100,00 | 0,92 | 108,70 | 177,42 |
| ZnO 2(silox 3C) 141000 | 5,00 | 5,6 | 0,89 | 8,87 |
| Acide stéarique 141500 | 1,00 | 0,85 | 1,18 | 1,77 |
| N330 155004 | 20 | 1,82 | 10,99 | 35,48 |
| PolyBd-CC | 10,92 | 0,90 | 12,13 | 19,37 |
| xylylene diamine | 3,39 | 1,032 | 3,28 | 6,01 |
| Phloroglucinol tri CC | 5,70 | 1,00 | 5,70 | 10,11 |
| Huile plaxolène 50 | 3,00 | 0,9 | 3,33 | 5,32 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| Total | 154,45 | 1,03 | 149,92 | 274,03 |

Tableau 19 : Composition de caoutchouc 112 selon l'invention (avec 20 pce de noir de carbone et 20 pce de NIPU issu de PolyBd-CC et EDEA, avec allongeur phloroglucinol tri CC) :

| Composé | Parts | Masse volumique (g/mL) | Volume (mL) | Masse (g) |
|---|---|---|---|---|
| IR Nipol 2200 | 100,00 | 0,92 | 108,70 | 177,31 |
| ZnO 2(silox 3C) 141000 | 5,00 | 5,6 | 0,89 | 8,87 |
| Acide stéarique 141500 | 1,00 | 0,85 | 1,18 | 1,77 |
| N330 155004 | 20 | 1,82 | 10,99 | 35,46 |
| PolyBd-CC | 10,85 | 0,90 | 12,06 | 19,24 |
| EDEA | 3,59 | 0,998 | 3,60 | 6,37 |
| Phloroglucinol tri CC | 5,56 | 1,00 | 5,56 | 9,86 |
| Huile plaxolène 50 | 3,00 | 0,9 | 3,33 | 5,32 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| Total | 154,44 | 1,03 | 150,02 | 273,84 |

Tableau 20 : Composition de caoutchouc 113 selon l'invention (avec 20 pce de noir de carbone et 20 pce de NIPU issu de PolyBd-CC et TAEA, avec allongeur phloroglucinol tri CC) :

| Composé | Parts | Masse volumique (g/mL) | Volume (mL) | Masse (g) |
|---|---|---|---|---|
| IR Nipol 2200 | 100,00 | 0,92 | 108,70 | 177,20 |
| ZnO 2(silox 3C) 141000 | 5,00 | 5,6 | 0,89 | 8,86 |
| Acide stéarique 141500 | 1,00 | 0,85 | 1,18 | 1,77 |
| N330 155004 | 20 | 1,82 | 10,99 | 35,44 |
| PolyBd-CC | 11,22 | 0,90 | 12,47 | 19,88 |

(suite)

| Composé | Parts | Masse volumique (g/mL) | Volume (mL) | Masse (g) |
|---|---|---|---|---|
| TAEA | 2,55 | 0,977 | 2,61 | 4,52 |
| Phloroglucinol tri CC | 6,23 | 1,00 | 6,23 | 11,04 |
| Huile plaxolène 50 | 3,00 | 0,9 | 3,33 | 5,32 |
| Acc CBS 80% 140130 | 2,24 | 1,22 | 1,84 | 3,97 |
| Rhenogran CLD/80 143910 | 0,96 | 1,199 | 0,80 | 1,70 |
| Soufre M300 | 2,24 | 2,07 | 1,08 | 3,97 |
| | | | | |
| **Total** | 154,44 | 1,03 | 150,11 | 273,67 |

Comme visible à la figure 11, l'ajout d'un NIPU synthétisé *in situ* permet également de renforcer la matrice élastomère, comme le montrent notamment les modules des mélanges IR/NIPU qui sont supérieurs à ceux du mélange renforcé par uniquement 20 pce de noir de carbone.

De plus, le choix de la structure de l'allongeur de chaînes (avec un premier précurseur polyamine 1,3-cyclohexanebis(méthylamine)) permet de moduler les propriétés mécaniques des compositions I7 à I10 afin d'obtenir des duretés proches de celle dudit mélange de référence (avec 40 pce de noir de carbone et sans NIPU).

L'effet Payne à 100° C de chacune des compositions I7 à I10 est très faible (voir ledit rapport inférieur ou égal à 1,05), quel que soit l'allongeur de chaînes utilisé.

Comme visible à la figure 12, le choix de la polyamine utilisée (pour un même allongeur de chaînes phloroglucinol tri CC) impacte également les propriétés mécaniques des compositions I10 à I13 et permet de leur conférer des duretés variables (48 à 52 Shore A). Dans tous les cas, l'effet Payne à 100° C est toujours fortement réduit en comparaison dudit mélange de référence (voir ledit rapport inférieur ou égal à 1,09, voire à 1,06).

Comme visible à la figure 13 qui montre les propriétés dynamiques des compositions I7 à I13 mesurées à différentes températures (à -30° C, 0° C, 25° C, 65° C et 100°C), l'effet Payne est considérablement réduit pour ces compositions I7 à I13 en comparaison dudit mélange de référence.

En conclusion, les résultats précités démontrent que les propriétés dynamiques des compositions selon ce second mode de l'invention sont nettement améliorées par rapport à l'art antérieur représenté par ledit mélange de référence (avec 40 pce de noir de carbone et sans NIPU), ce qui permet avantageusement de mettre en œuvre ces compositions dans des applications dynamiques et dans une large gamme de températures allant de -30° C à 100° C.

Les figures 14 à 20 montrent que les NIPU ainsi obtenus *in situ* sont très finement dispersés de manière relativement homogène dans le polyisoprène sous forme de nodules de plus grande dimension transversale moyenne en nombre comprise entre 50 nm et 2 μm, voire entre 100 nm et 1 μm. Cette dispersion contribue à l'obtention des propriétés mécaniques précitées des compositions de l'invention incluant notamment leur effet Payne minimisé.

En résumé, le renforcement chimique de la matrice élastomère par des réseaux de NIPU ainsi enchevêtrés permet de maintenir les propriétés mécaniques (modules et dureté) des compositions I7 à I13 par rapport audit mélange de référence, et en minimisant la non-linéarité (rigidification dynamique) par rapport à ce dernier.

## Revendications

1. Composition de caoutchouc utilisable dans un organe mécanique à fonction dynamique en particulier choisi parmi des supports antivibratoires et des articulations élastiques pour véhicules à moteur ou dispositifs industriels, la composition étant à base d'au moins un élastomère et comprenant :

   - une charge renforçante, et
   - un polymère à groupes uréthanes dispersé dans ledit au moins un élastomère,

   la composition comprenant le produit d'une réaction *in situ* de mélangeage thermomécanique dudit au moins un élastomère avec ladite charge renforçante, des précurseurs dudit polymère à groupes uréthanes et un allongeur de chaîne,

   dans laquelle la composition présente un rapport G' 0,5% / G' 20% de modules de conservation G' relatifs aux modules de cisaillement complexes G* vérifiant l'une au moins des conditions suivantes (i) à (v), G' 0,5% et G' 20% étant mesurés selon la norme ISO 4664 à des amplitudes de déformations dynamiques respectives de 0,5 % et 20 %, sur des éprouvettes de double cisaillement soumises à des déformations en cisaillement de 0,02 % à 50

% à une même fréquence de 5 Hz et à une même température T:

(i) G' 0,5 % / G' 20 % $\leq$ 1,15 pour T = 100° C,
(ii) G' 0,5 % / G' 20 % $\leq$ 1,40 pour T = 65° C,
(iii) G' 0,5 % / G' 20 % $\leq$ 1,50 pour T = 25° C,
(iv) G' 0,5 % / G' 20 % $\leq$ 1,60 pour T = 0° C,
(v) G' 0,5 % / G' 20 % $\leq$ 2,50 pour T = -30° C.

**2.** Composition de caoutchouc selon la revendication 1, dans laquelle la composition vérifie au moins la condition (i), et de préférence en outre les conditions (ii), (iii), (iv) et (v), et dans laquelle lesdites éprouvettes sont soumises à un conditionnement mécanique préalable de 0 $\pm$ 4 mm, 50 mm/min pendant 8 cycles.

**3.** Composition de caoutchouc selon la revendication 1 ou 2, dans laquelle la composition comprend (pce : parties en poids pour 100 parties d'élastomère(s)) de 10 à 40 pce d'un noir de carbone à titre de charge renforçante et de 10 à 50 pce dudit polymère à groupes uréthanes, la composition vérifiant de préférence en outre la condition suivante (i-a):

$$\text{(i-a) } G' \ 0{,}5\% \ / \ G' \ 20\% \leq 1{,}12 \text{ pour } T = 100° \text{ C,}$$

et de préférence dans laquelle la composition comprend de 15 à 30 pce dudit noir de carbone par exemple de grade N330 et de 15 à 30 pce dudit polymère à groupes uréthanes.

**4.** Composition de caoutchouc selon une des revendications précédentes, dans laquelle ledit polymère à groupes uréthanes est dispersé dans ledit au moins un élastomère sous forme de nodules de plus grande dimension transversale moyenne en nombre comprise entre 1 nm et 5 $\mu$m, de préférence entre 50 nm et 2 $\mu$m.

**5.** Composition de caoutchouc selon une des revendications précédentes, dans laquelle la composition présente :

- l'un au moins des modules sécants M100, M300 et M400 suivants respectivement à 100 %, 300 % et 400 % de déformation, mesurés en traction uni-axiale selon la norme ASTM D 412 :

$$M100 \geq 1{,}5 \text{ MPa,}$$

$$M300 \geq 5{,}5 \text{ MPa}$$

, et

$$M400 \geq 9{,}5 \text{ MPa ;}$$

et/ou

- une résistance à la rupture R/r, mesurée en traction uni-axiale selon la norme ASTM D 412, d'au moins 26 MPa.

**6.** Composition de caoutchouc selon une des revendications précédentes, dans laquelle la composition présente une dureté Shore A, mesurée selon la norme ASTM D2240, d'au moins 48 et de préférence comprise entre 50 et 55.

**7.** Composition de caoutchouc selon une des revendications précédentes, dans laquelle ledit au moins un élastomère est un caoutchouc choisi parmi les élastomères diéniques ou non, à l'exception des caoutchoucs silicones, la composition comprenant un système de réticulation par exemple au soufre qui est apte à réagir avec ledit produit de ladite réaction *in situ* de mélangeage thermomécanique pour co-réticuler ledit au moins un élastomère avec ledit polymère à groupes uréthanes,
et de préférence dans laquelle ledit au moins un élastomère est un élastomère diénique apolaire, étant de préférence choisi parmi le caoutchouc naturel (NR), les polyisoprènes (IR), les polybutadiènes (BR) et les copolymères styrène-butadiène (SBR).

**8.** Composition de caoutchouc selon une des revendications précédentes, dans laquelle ledit polymère à groupes uréthanes est segmenté par :

- des segments rigides qui sont présents dans ledit polymère suivant une fraction massique comprise entre 20 % et 40 %, de préférence entre 25 % et 35 %, et qui comprennent ledit allongeur de chaîne et un premier dit précurseur, et par
- des segments souples comprenant un second dit précurseur qui est un polymère diénique à bouts de chaîne fonctionnalisés, de préférence un polybutadiène fonctionnalisé,

ledit polymère à groupes uréthanes étant co-réticulé, via des doubles liaisons dudit second précurseur, avec ledit au moins un élastomère en formant un réseau tridimensionnel relié par des liaisons covalentes audit moins un élastomère,
de préférence dans laquelle lesdits premier précurseur et second précurseur forment deux réactifs séparés pour ladite réaction *in situ* de mélangeage thermomécanique avec ledit au moins un élastomère, ladite charge renforçante et ledit allongeur de chaîne, lesdits précurseurs ne formant pas un prépolymère de précurseurs,
et de préférence dans laquelle ledit allongeur de chaîne présente une masse molaire inférieure ou égale à 700 g/mol et de préférence inférieure à 600 g/mol.

**9.** Composition de caoutchouc selon la revendication 8, dans laquelle ledit polymère à groupes uréthanes appartient à la famille des polyuréthanes obtenus à partir d'un composé isocyanate, à l'exclusion des polyuréthane-urée,
et de préférence dans laquelle :

- ledit premier précurseur est un polyisocyanate de fonctionnalité supérieure à 2, de préférence choisi parmi des monomères ou pré-polymères à base de 4,4'-méthylène bis(phényl isocyanate), l'isophorone diisocyanate, l'hexaméthylène diisocyanate et le 4,4'-diisocyanate de diphénylméthylène,
- ledit second précurseur est un polymère diénique fonctionnalisé diol de fonctionnalité supérieure à 2, de préférence un polybutadiène hydroxytéléchélique non hydrogéné de masse moléculaire moyenne en nombre comprise entre 1000 et 3000 g/mol et de fonctionnalité égale ou supérieure à 2,2, et
- ledit allongeur de chaîne est un polyol choisi parmi les diols et triols qui présente une masse molaire inférieure ou égale à 300 g/mol, de préférence choisi parmi le cyclohexane diméthanol, l'isosorbide et le glycérol.

**10.** Composition de caoutchouc selon la revendication 9, dans laquelle :

- ledit au moins un élastomère est un élastomère diénique apolaire de préférence choisi parmi le caoutchouc naturel (NR), les polyisoprènes (IR), les polybutadiènes (BR) et les copolymères styrène-butadiène (SBR),
- ladite charge renforçante comprend un noir de carbone par exemple de grade N330 présent dans la composition selon une quantité comprise entre 15 et 30 pce (pce : parties en poids pour 100 parties d'élastomère(s)),
- ledit polymère à groupes uréthanes est présent dans la composition selon une quantité comprise entre 15 et 30 pce, et
- la quantité totale dudit noir de carbone et dudit polymère à groupes uréthanes dans la composition est comprise entre 35 et 55 pce,

et de préférence dans laquelle la composition vérifie la condition suivante (i-a):

$$\text{(i-a) } G'\ 0{,}5\% \ /\ G'\ 20\% \leq 1{,}12 \text{ pour } T = 100°\ C.$$

**11.** Composition de caoutchouc selon la revendication 8, dans laquelle ledit polymère à groupes uréthanes appartient à la famille des polyhydroxyuréthanes obtenus sans isocyanate,
et de préférence dans laquelle :

- ledit premier précurseur est une polyamine choisie parmi les diamines et les triamines, de préférence choisie parmi la 1,3-cyclohexanebis(méthylamine), la xylylène diamine, la 2,2'-(éthylènedioxy)bis(éthylamine) et la tris(2-aminoéthyl)amine,
- ledit second précurseur est un polymère diénique fonctionnalisé cyclocarbonate en bouts de chaîne, de préférence un polybutadiène fonctionnalisé par deux cycles carbonates terminaux à 5 ou 6 membres chacun, et
- ledit allongeur de chaîne est un carbonate cyclique qui présente une masse molaire inférieure ou égale à 500 g/mol, de préférence choisi parmi le cyclohexane bis carbonate, le résorcinol bis carbonate, le glycérol tri carbonate et le phloroglucinol tri carbonate.

**12.** Composition de caoutchouc selon la revendication 11, dans laquelle :

- ledit au moins un élastomère est un élastomère diénique apolaire de préférence choisi parmi le caoutchouc naturel (NR), les polyisoprènes (IR), les polybutadiènes (BR) et les copolymères styrène-butadiène (SBR),
- ladite charge renforçante comprend un noir de carbone par exemple de grade N330 présent dans la composition selon une quantité comprise entre 15 et 30 pce (pce : parties en poids pour 100 parties d'élastomère(s)),
- ledit polymère à groupes uréthanes est présent dans la composition selon une quantité comprise entre 15 et 30 pce, et
- la quantité totale dudit noir de carbone et dudit polymère à groupes uréthanes dans la composition est comprise entre 35 et 55 pce,

de préférence dans laquelle la composition vérifie l'une au moins et de préférence l'ensemble des conditions suivantes (i-a) à (v-a):

(i-a) G' 0,5 % / G' 20 % ≤ 1,12 pour T = 100° C,
(ii-a) G' 0,5 % / G' 20 % ≤ 1,20 pour T = 65° C,
(iii-a) G' 0,5 % / G' 20 % ≤ 1,30 pour T = 25° C,
(iv-a) G' 0,5 % / G' 20 % ≤ 1,40 pour T = 0° C,
(v-a) G' 0,5 % / G' 20 % ≤ 1,50 pour T = -30° C.

et de préférence vérifie en outre l'une au moins et de préférence l'ensemble des conditions suivantes (i-b) à (v-b) :

(i-b) G' 0,5 % / G' 20 % ≤ 1,10 pour T = 100° C,
(ii-b) G' 0,5 % / G' 20 % ≤ 1,15 pour T = 65° C,
(iii-b) G' 0,5 % / G' 20 % ≤ 1,20 pour T = 25° C,
(iv-b) G' 0,5 % / G' 20 % ≤ 1,25 pour T = 0° C,
(v-b) G' 0,5 % / G' 20 % ≤ 1,40 pour T = -30° C.

**13.** Organe mécanique à fonction dynamique en particulier choisi parmi des supports antivibratoires et des articulations élastiques pour véhicules à moteur ou dispositifs industriels, ledit organe comprenant au moins une partie élastique qui est constituée d'une composition de caoutchouc et qui est adaptée pour être soumise à des sollicitations dynamiques, dans lequel ladite composition est telle que définie à l'une des revendications précédentes.

**14.** Procédé de préparation d'une composition de caoutchouc selon une des revendications 1 à 12, dans lequel le procédé comprend les étapes suivantes :

a) la formation d'un mélange non réticulé comprenant une dispersion, dans ledit au moins un élastomère, dudit polymère à groupes uréthanes par ladite réaction de mélangeage thermomécanique dudit au moins un élastomère avec ladite charge renforçante, lesdits précurseurs et ledit allongeur de chaîne, ladite réaction étant de préférence mise en œuvre dans un mélangeur interne à une température maximale comprise entre 130° C et 180° C,
b) ajout au mélange d'un système de réticulation avec un travail mécanique du mélange réticulable ainsi obtenu de préférence réalisé dans un mélangeur ouvert à une température maximale inférieure à 80° C, puis
c) réticulation du mélange réticulable par vulcanisation sous presse à une température comprise entre 130° C et 180° C, de préférence par moulage compression, ledit polymère à groupes uréthanes étant co-réticulé par voie chimique avec ledit au moins un élastomère en formant avec ce dernier des liaisons covalentes,
de préférence dans lequel lesdits précurseurs forment un premier précurseur et un second précurseur qui sont ajoutés séparément à l'étape a) après ledit au moins un élastomère, ledit polymère à groupes uréthanes étant segmenté par des segments rigides comprenant ledit allongeur de chaîne et ledit premier précurseur et par des segments souples comprenant ledit second précurseur,
et de préférence dans lequel la fraction massique totale dudit premier précurseur et dudit allongeur de chaîne dans ledit polymère à groupes uréthanes formé à l'étape a) est comprise entre 20 % et 40 %, de préférence entre 25 % et 35 %.

**15.** Utilisation d'un polymère à groupes uréthanes dispersé dans une composition de caoutchouc selon une des revendications 1 à 12, la composition de caoutchouc étant à base d'au moins un élastomère par une réaction *in situ* de mélangeage thermomécanique dudit au moins un élastomère avec une charge renforçante, des précurseurs dudit polymère et un allongeur de chaîne,

pour réduire l'effet Payne dans la composition à une température T inclusivement comprise entre -30° C et 100° C, l'effet Payne étant quantifié par ledit rapport G' 0,5% / G' 20% de modules de conservation G' relatifs aux modules de cisaillement complexes G de la composition,
en comparaison d'un mélange de caoutchouc à base dudit au moins un élastomère, dépourvu dudit polymère à groupes uréthanes et comprenant ladite charge renforçante selon une quantité en pce égale à la somme des pce, dans la composition, de ladite charge renforçante et dudit polymère à groupes uréthanes,
et de préférence dans laquelle la composition comprend (pce : parties en poids pour 100 parties d'élastomère(s)) de 10 à 40 pce d'un noir de carbone à titre de charge renforçante et de 10 à 50 pce dudit polymère à groupes uréthanes, ladite utilisation étant :

pour réduire ledit rapport G' 0,5% / G' 20% de plus de 40 %, et optionnellement en outre conserver à moins de 15 % près la dureté Shore A de la composition,
en comparaison dudit mélange de caoutchouc dépourvu dudit polymère à groupes uréthanes et comprenant ledit noir de carbone selon une quantité en pce égale à la somme des pce, dans la composition, dudit noir de carbone et dudit polymère à groupes uréthanes.

**Patentansprüche**

1. Kautschukzusammensetzung, die in einem mechanischen Element mit dynamischer Funktion verwendet werden kann, insbesondere gewählt aus Schwingungsdämpfern und elastischen Gelenken für Kraftfahrzeuge oder industrielle Vorrichtungen, wobei die Zusammensetzung auf wenigstens einem Elastomer basiert und umfasst:

   - einen verstärkenden Füllstoff, und
   - ein in dem wenigstens einen Elastomer dispergiertes Polymer mit Urethangruppen,
   wobei die Zusammensetzung das Produkt einer thermomechanischen *in situ* Mischungsreaktion des wenigstens einen Elastomers mit dem verstärkenden Füllstoff, Vorläufern des Polymers mit Urethangruppen und einem Kettenverlängerer erzeugten Reaktion umfasst,
   wobei die Zusammensetzung ein Verhältnis G' 0,5 % / G' 20 % von Konservierungsmodulen G' in Bezug auf komplexe Schermodule G* aufweist, die wenigstens eine der folgenden Bedingungen (i) bis (v) erfüllen, wobei G' 0,5 % und G' 20 % gemäß der Norm ISO 4664 bei dynamischen Verformungsamplituden von 0,5 % bzw. 20 % an Doppelscherproben gemessen werden, die Scherverformungen von 0,02 % bis 50 % bei derselben Frequenz von 5 Hz und derselben Temperatur T ausgesetzt sind:

   (i) G' 0,5 % / G' 20 % $\leq$ 1,15 bei T = 100° C,
   (ii) G' 0,5 % / G' 20 % $\leq$ 1,40 bei T = 65° C,
   (iii) G' 0,5 % / G' 20 % $\leq$ 1,50 bei T = 25° C,
   (iv) G' 0,5 % / G' 20 % $\leq$ 1,60 bei T = 0° C,
   (v) G' 0,5 % / G' 20 % $\leq$ 2,50 bei T = -30° C.

2. Kautschukmischung nach Anspruch 1, wobei die Mischung wenigstens die Bedingung (i) und bevorzugt zusätzlich die Bedingungen (ii), (iii), (iv) und (v) erfüllt und wobei die Proben einer vorherigen mechanischen Konditionierung von 0 $\pm$ 4 mm, 50 mm/min für 8 Zyklen unterzogen werden.

3. Kautschukzusammensetzung nach Anspruch 1 oder 2, wobei die Zusammensetzung (Gewichtsteile pro 100 Teile Elastomer(e)) 10 bis 40 pce eines Rußes als verstärkenden Füllstoff und 10 bis 50 pce des Polymers mit Urethangruppen umfasst, wobei die Zusammensetzung bevorzugt ferner die folgende Bedingung (i-a) erfüllt:

   $$\text{(i-a) } G' \, 0{,}5\,\% \,/\, G' \, 20\,\% \leq 1{,}12 \text{ bei } T = 100\,°C,$$

   und bevorzugt wobei die Zusammensetzung 15 bis 30 pce des Rußes, beispielsweise des Grads N330, und 15 bis 30 pce des Polymers mit Urethangruppen umfasst.

4. Kautschukzusammensetzung nach einem der vorhergehenden Ansprüche, wobei das Polymer mit Urethangruppen in dem wenigstens einen Elastomer in Form von Knötchen mit einer größeren durchschnittlichen Querabmessung in einer Anzahl zwischen 1 nm und 5 $\mu$m, bevorzugt zwischen 50 nm und 2 $\mu$m, dispergiert ist.

5. Kautschukzusammensetzung nach einem der vorhergehenden Ansprüche, wobei die Zusammensetzung aufweist:

- wenigstens eines der folgenden Sekantenmodule M100, M300 und M400 bei 100 %, 300 % bzw. 400 % Verformung, gemessen in einachsiger Zugspannung gemäß der Norm ASTM D 412:

$$M100 \geq 1{,}5\ MPa,$$

$$M300 \geq 5{,}5\ MPa,$$

und

$$M400 \geq 9{,}5\ MPa;$$

und/oder

- eine Bruchfestigkeit R/r, gemessen in einachsiger Zugspannung gemäß der Norm ASTM D 412, von wenigstens 26 MPa.

6. Kautschukzusammensetzung nach einem der vorhergehenden Ansprüche, wobei die Zusammensetzung eine Shore-A-Härte, gemessen gemäß der Norm ASTM D2240, von wenigstens 48 und bevorzugt zwischen 50 und 55 aufweist.

7. Kautschukzusammensetzung nach einem der vorhergehenden Ansprüche, wobei

das wenigstens eine Elastomer ein Kautschuk ist, der aus dienischen oder nicht dienischen Elastomeren gewählt ist, mit Ausnahme von Silikonkautschuken, wobei die Zusammensetzung ein Vernetzungssystem, beispielsweise mit Schwefel,
umfasst, das in der Lage ist, mit dem Produkt der thermomechanischen *in situ* Mischungsreaktion zu reagieren, um das wenigstens eine Elastomer mit dem Polymer mit Urethangruppen zu co-vernetzen,
und wobei bevorzugt das wenigstens eine Elastomer ein apolares Dienelastomer ist,
das bevorzugt aus Naturkautschuk (NR), Polyisoprenen (IR), Polybutadienen (BR) und Styrol-Butadien-Copolymeren (SBR) gewählt ist.

8. Kautschukzusammensetzung gemäß einem der vorhergehenden Ansprüche, wobei das Polymer mit Urethangruppen segmentiert ist durch:

- starre Segmente, die in dem Polymer in einem Massenanteil zwischen 20 % und 40 %, bevorzugt zwischen 25 % und 35 %, vorliegen und die den Kettenverlängerer und einen ersten Vorläufer umfassen, und durch
- flexible Segmente, die einen zweiten Vorläufer umfassen, der ein Dienpolymer mit funktionalisierten Kettenenden ist, bevorzugt ein funktionalisiertes Polybutadien,
wobei das Polymer mit Urethangruppen über Doppelbindungen des zweiten Vorläufers mit dem wenigstens einen Elastomer co-vernetzt ist, unter Bildung eines dreidimensionalen Netzwerks, das über kovalente Bindungen mit dem wenigstens einen Elastomer verbunden ist,
bevorzugt wobei der erste Vorläufer und der zweite Vorläufer zwei getrennte Reaktanten für die thermomechanische *in situ* Mischungsreaktion mit dem wenigstens einen Elastomer, dem verstärkenden Füllstoff und dem Kettenverlängerer bilden, wobei die Vorläufer kein Vorpolymer aus Vorläufern bilden,
und bevorzugt wobei der Kettenverlängerer eine Molmasse von kleiner gleich 700 g/mol und bevorzugt kleiner 600 g/mol aufweist.

9. Kautschukzusammensetzung nach Anspruch 8, wobei das Polymer mit Urethangruppen zur Familie der aus einer Isocyanatverbindung erhaltenen Polyurethane gehört, ausgenommen Polyurethanharnstoff,
und bevorzugt wobei:

- der erste Vorläufer ein Polyisocyanat mit einer Funktionalität größer 2 ist, das bevorzugt gewählt ist aus Monomeren oder Präpolymeren auf Basis von 4,4'-Methylenbis(phenylisocyanat), Isophorondiisocyanat, Hexamethylendiisocyanat und 4,4'-Diphenylmethylendiisocyanat,

- der zweite Vorläufer ein funktionalisiertes Dienpolymer mit einer Funktionalität größer 2 ist, bevorzugt ein nicht hydriertes hydroxytelecheles Polybutadien mit einem zahlenmittleren Molekulargewicht zwischen 1000 und 3000 g/mol und einer Funktionalität größer gleich 2,2, und
- der Kettenverlängerer ein Polyol ist, gewählt aus Diolen und Triolen, das eine Molmasse von kleiner gleich 300 g/mol aufweist, bevorzugt gewählt aus Cyclohexandimethanol, Isosorbid und Glycerin.

**10.** Kautschukzusammensetzung nach Anspruch 9, wobei:

- das wenigstens eine Elastomer ein apolares Dienelastomer ist, bevorzugt gewählt aus Naturkautschuk (NR), Polyisoprenen (IR), Polybutadienen (BR) und Styrol-Butadien-Copolymeren (SBR),
- der verstärkende Füllstoff einen Ruß umfasst, beispielsweise des Grads N330, der in der Zusammensetzung in einer Menge zwischen 15 und 30 pce (pce: Gewichtsteile pro 100 Teile Elastomer(e)) vorliegt,
- das Polymer mit Urethangruppen in der Zusammensetzung in einer Menge zwischen 15 und 30 pce vorliegt, und
- die Gesamtmenge des Rußes und des Polymers mit Urethangruppen in der Zusammensetzung zwischen 35 und 55 pce liegt,

und wobei bevorzugt die Zusammensetzung die folgende Bedingung (i-a) erfüllt:

(i-a) G' 0,5 % / G' 20 % ≤ 1,12 bei T = 100 °C.

**11.** Kautschukmischung nach Anspruch 8, wobei das Polymer mit Urethangruppen zur Familie der ohne Isocyanat erhaltenen Polyhydroxyurethane gehört, und wobei bevorzugt:

- der erste Vorläufer ein Polyamin ist, gewählt aus Diaminen und Triaminen, bevorzugt aus 1,3-Cyclohexan-bis(methylamin), Xylylendiamin, 2,2'-(Ethylendioxy)bis(ethylamin) und Tris(2-aminoethyl)amin,
- der zweite Vorläufer ein Dienpolymer ist, das an den Kettenenden mit Cyclocarbonat funktionalisiert ist, bevorzugt ein Polybutadien, das mit zwei endständigen Carbonatringen mit jeweils 5 oder 6 Gliedern funktionalisiert ist, und
- der Kettenverlängerer ein cyclisches Carbonat ist, das eine Molmasse kleiner gleich 500 g/mol aufweist, bevorzugt gewählt aus Cyclohexan-bis-carbonat, Resorcin-bis-carbonat, Glycerin-tri-carbonat und Phloroglucinol-tri-carbonat.

**12.** Kautschukzusammensetzung nach Anspruch 11, wobei:

- das wenigstens eine Elastomer ein apolares Dienelastomer ist, bevorzugt gewählt aus Naturkautschuk (NR), Polyisoprenen (IR), Polybutadienen (BR) und Styrol-Butadien-Copolymeren (SBR),
- der verstärkende Füllstoff einen Ruß, beispielsweise des Grads N330, umfasst, der in der Zusammensetzung in einer Menge zwischen 15 und 30 pce (pce: Gewichtsteile pro 100 Teile Elastomer(e)) vorliegt,
- das Polymer mit Urethangruppen in der Zusammensetzung in einer Menge zwischen 15 und 30 pce vorliegt, und
- die Gesamtmenge des Rußes und des Polymers mit Urethangruppen in der Zusammensetzung zwischen 35 und 55 pce liegt,
bevorzugt wobei die Zusammensetzung wenigstens eine und bevorzugt alle der folgenden Bedingungen (i-a) bis (v-a) erfüllt:

(i-a) G' 0,5 % / G' 20 % ≤ 1,12 bei T = 100° C,
(ii-a) G' 0,5 % / G' 20 % ≤ 1,20 bei T = 65° C,
(iii-a) G' 0,5 % / G' 20 % ≤ 1,30 bei T = 25° C,
(iv-a) G' 0,5 % / G' 20 % ≤ 1,40 bei T = 0° C,
(v-a) G' 0,5 % / G' 20 % ≤ 1,50 bei T = -30° C.

und bevorzugt zusätzlich wenigstens eine und bevorzugt alle der folgenden Bedingungen (i-b) bis (v-b) erfüllt:

(i-b) G' 0,5 % / G' 20 % ≤ 1,10 bei T = 100° C,
(ii-b) G' 0,5 % / G' 20 % ≤ 1,15 bei T = 65° C,
(iii-b) G' 0,5 % / G' 20 % ≤ 1,20 bei T = 25° C,
(iv-b) G' 0,5 % / G' 20 % ≤ 1,25 bei T = 0° C,
(v-b) G' 0,5 % / G' 20 % ≤ 1,40 bei T = -30° C.

**13.** Mechanisches Element mit dynamischer Funktion, insbesondere gewählt aus Schwingungsdämpfern und elastischen Gelenken für Kraftfahrzeuge oder industrielle Vorrichtungen, wobei das Element wenigstens einen elastischen Teil umfasst, der aus einer Kautschukzusammensetzung besteht und dafür ausgebildet ist, dynamischen Belastungen ausgesetzt zu werden, wobei die Zusammensetzung wie in einem der vorhergehenden Ansprüche definiert ist.

**14.** Verfahren zur Herstellung einer Kautschukzusammensetzung nach einem der Ansprüche 1 bis 12, wobei das Verfahren die folgenden Schritte umfasst:

a) Bildung eines nicht vernetzten Gemischs, das eine Dispersion des Polymers mit Urethangruppen in dem wenigstens einen Elastomer umfasst, durch die thermomechanische Mischungsreaktion des wenigstens einen Elastomers mit dem verstärkenden Füllstoff, den Vorstufen und dem Kettenverlängerer, wobei die Reaktion bevorzugt in einem Innenmischer bei einer maximalen Temperatur zwischen 130 °C und 180 °C durchgeführt wird,
b) Zugabe eines Vernetzungssystems zur Mischung mit einer mechanischen Bearbeitung der so erhaltenen vernetzbaren Mischung, die bevorzugt in einem offenen Mischer bei einer maximalen Temperatur kleiner 80 °C durchgeführt wird, und anschließend
c) Vernetzung des vernetzbaren Gemischs durch Vulkanisation unter Druck bei einer Temperatur zwischen 130 °C und 180 °C, bevorzugt durch Formpressen, wobei das Polymer mit Urethangruppen chemisch mit dem wenigstens einen Elastomer quervernetzt wird, indem es mit diesem kovalente Bindungen eingeht,
wobei die Vorläufer bevorzugt einen ersten Vorläufer und einen zweiten Vorläufer bilden, die in Schritt a) getrennt nach dem wenigstens einen Elastomer zugegeben werden, wobei das Polymer mit Urethangruppen durch starre Segmente, die den Kettenverlängerer und den ersten Vorläufer umfassen, und durch flexible Segmente, die den zweiten Vorläufer umfassen, segmentiert ist,
und bevorzugt wobei der Gesamtmassenanteil des ersten Vorläufers und des Kettenverlängererers in dem in Schritt a) gebildeten Polymer mit Urethangruppen zwischen 20 % und 40 %, bevorzugt zwischen 25 % und 35 %, liegt.

**15.** Verwendung eines Polymers mit Urethangruppen, das in einer

Kautschukzusammensetzung gemäß einem der Ansprüche 1 bis 12 dispergiert ist, wobei die Kautschukzusammensetzung auf wenigstens einem Elastomer basiert, durch eine thermomechanische *in situ* Mischungsreaktion des wenigstens einen Elastomers mit einem verstärkenden Füllstoff, Vorstufen des Polymers und einem Kettenverlängerer,
um den Payne-Effekt in der Zusammensetzung bei einer Temperatur T von -30 °C bis einschließlich 100 °C zu verringern, wobei der Payne-Effekt durch das Verhältnis G' 0,5 % / G' 20 % der Konservierungsmodule G' relativ zu den komplexen Schermodulen G der Zusammensetzung quantifiziert wird,
im Vergleich zu einer Kautschukmischung auf der Basis des wenigstens einen Elastomers, dem das Polymer mit Urethangruppen fehlt und umfassend den verstärkenden Füllstoff in einer Menge in pce, die gleich der Summe der pce in der Zusammensetzung des verstärkenden Füllstoffs und des Polymers mit Urethangruppen ist,
und bevorzugt wobei die Zusammensetzung (pce: Gewichtsteile pro 100 Teile Elastomer(e)) 10 bis 40 pce eines Rußes als verstärkenden Füllstoff und 10 bis 50 pce des Polymers mit Urethangruppen umfasst, wobei die Verwendung darin besteht:

das Verhältnis G' 0,5 % / G' 20 % um über 40 % zu verringern und optional ferner die Shore-A-Härte der Zusammensetzung bei weniger als 15 % beizubehalten,
im Vergleich zu der Kautschukmischung, der das Polymer mit Urethangruppen fehlt und umfassend den Ruß in einer Menge in pce, die gleich der pce-Summe in der Zusammensetzung des Rußes und des Polymers mit Urethangruppen ist.

## Claims

**1.** A rubber composition usable in a mechanical member with a dynamic function chosen in particular from antivibration supports and elastic articulations for motorized vehicles or industrial devices, the composition being based on at least one elastomer and comprising:

- a reinforcing filler, and
- a polymer bearing urethane groups dispersed in said at least one elastomer,

the composition comprising the product of an *in situ* thermomechanical blending reaction of said at least one elastomer with said reinforcing filler, precursors of said polymer bearing urethane groups and a chain extender, wherein the composition has a ratio G' 0.5% / G' 20% of storage moduli G' relative to the complex shear moduli G* satisfying at least one of the following conditions (i) to (v), G' 0.5% and G' 20% being measured according to the standard ISO 4664 at respective dynamic strain amplitudes of 0.5% and 20%, on double shear test specimens subjected to shear strains of from 0.02% to 50% at the same frequency of 5 Hz and at the same temperature T:

(i) G' 0,5 % / G' 20 % ≤ 1.15 for T = 100° C,
(ii) G' 0,5 % / G' 20 % ≤ 1.40 for T = 65° C,
(iii) G' 0,5 % / G' 20 % ≤ 1.50 for T = 25° C,
(iv) G' 0,5 % / G' 20 % ≤ 1.60 for T = 0° C,
(v) G' 0,5 % / G' 20 % ≤ 2.50 for T = -30° C.

**2.** The rubber composition as claimed in claim 1, wherein the composition satisfies at least condition (i), and preferably also conditions (ii), (iii), (iv) and (v), and in which said test specimens are subjected to preliminary mechanical conditioning of 0 ± 4 mm, 50 mm/minute over 8 cycles.

**3.** The rubber composition according to claim 1 or 2, wherein the composition comprises (phr: parts by weight per 100 parts of elastomer(s)) from 10 to 40 phr of a carbon black as reinforcing filler and from 10 to 50 phr of said polymer bearing urethane groups, the composition preferably also satisfying the following condition (i-a):

$$\text{(i-a) } G'\,0.5\% \,/\, G'\,20\% \leq 1.12 \text{ for } T = 100°C,$$

and wherein the composition comprises from 15 to 30 phr of said carbon black, for example of N330 grade, and from 15 to 30 phr of said polymer bearing urethane groups.

**4.** The rubber composition according to one of the preceding claims, wherein said polymer bearing urethane groups is dispersed in said at least one elastomer in the form of nodules with a largest number-average transverse dimension of between 1 nm and 5 μm, preferably between 50 nm and 2 μm.

**5.** The rubber composition according to one of the preceding claims, wherein the composition has:

- at least one of the following secant moduli M100, M300 and M400 at 100%, 300% and 400% strain, respectively, measured in uniaxial tension according to the standard ASTM D 412:

$$M100 \geq 1.5 \text{ MPa},$$

$$M300 \geq 5.5 \text{ MPa},$$

and

$$M400 \geq 9.5 \text{ MPa};$$

and/or

- a tensile strength R/r measured in uniaxial tension according to the standard ASTM D 412 of at least 26 MPa.

**6.** The rubber composition according to one of the preceding claims, wherein the composition has a Shore A hardness, measured according to the standard ASTM D 2240, of at least 48 and preferably between 50 and 55.

**7.** The rubber composition according to one of the preceding claims, wherein said at least one elastomer is a rubber chosen from diene or non-diene elastomers, with the exception of silicone rubbers, the composition comprising a crosslinking system, for example with sulphur, which is capable of reacting with said product of said *in situ* thermomechanical blending reaction to co-crosslink said at least one elastomer with said polymer bearing urethane groups,
and preferably wherein said at least one elastomer is an apolar diene elastomer, being preferably chosen from natural

rubber (NR), polyisoprenes (IR), polybutadienes (BR) and styrene-butadiene copolymers (SBR).

**8.** The rubber composition according to one of the preceding claims, wherein said polymer bearing urethane groups is segmented with:

- rigid segments which are present in said polymer in a mass fraction of between 20% and 40%, preferably between 25% and 35%, and which comprise said chain extender and a first said precursor, and with
- flexible segments comprising a second said precursor which is a diene polymer bearing functionalized chain ends, preferably a functionalized polybutadiene,

said polymer bearing urethane groups being co-crosslinked, via double bonds of said second precursor, with said at least one elastomer, forming a three-dimensional network connected via covalent bonds to said at least one elastomer,
preferably wherein said first precursor and second precursor form two separate reagents for said *in situ* thermomechanical blending reaction with said at least one elastomer, said reinforcing filler and said chain extender, said precursors not forming a prepolymer of precursors,
and preferably wherein said chain extender has a molar mass of less than or equal to 700 g/mol and preferably less than 600 g/mol.

**9.** The rubber composition according to claim 8, wherein said polymer bearing urethane groups belongs to the family of polyurethanes obtained from an isocyanate compound, excluding polyurethane-ureas,
and preferably wherein:

- said first precursor is a polyisocyanate with a functionality of greater than 2, preferably chosen from monomers or prepolymers based on 4,4'-methylenebis(phenyl isocyanate), isophorone diisocyanate, hexamethylene diisocyanate and 4,4'-diphenylmethylene diisocyanate,
- said second precursor is a diol-functionalized diene polymer with a functionality of greater than 2, preferably a non-hydrogenated hydroxytelechelic polybutadiene with a number-average molecular mass of between 1000 and 3000 g/mol and a functionality of greater than or equal to 2.2, and
- said chain extender is a polyol chosen from diols and triols which has a molar mass of less than or equal to 300 g/mol, preferably chosen from cyclohexanedimethanol, isosorbide and glycerol.

**10.** The rubber composition according to claim 9, wherein:

- said at least one elastomer is an apolar diene elastomer, preferably chosen from natural rubber (NR), polyisoprenes (IR), polybutadienes (BR) and styrene-butadiene copolymers (SBR),
- said reinforcing filler comprises a carbon black, for example of N330 grade, present in the composition in an amount of between 15 and 30 phr (phr: parts by weight per 100 parts of elastomer(s)),
- said polymer bearing urethane groups is present in the composition in an amount of between 15 and 30 phr, and
- the total amount of said carbon black and of said polymer bearing urethane groups in the composition is between 35 and 55 phr,

and preferably wherein the composition satisfies the following condition (i-a):

$$\text{(i-a) } G'\ 0.5\% \,/\, G'\ 20\% \leq 1.12 \text{ for } T = 100°C.$$

**11.** The rubber composition according to claim 8, wherein said polymer bearing urethane groups belongs to the family of polyhydroxyurethanes obtained without an isocyanate,
and preferably wherein:

- said first precursor is a polyamine chosen from diamines and triamines, preferably chosen from 1,3-cyclohexanebis(methylamine), xylylenediamine, 2,2'-(ethylenedioxy)bis(ethylamine) and tris(2-aminoethyl)amine,
- said second precursor is a diene polymer functionalized with cyclocarbonate chain ends, preferably a polybutadiene functionalized with two carbonate end rings which are each 5- or 6-membered, and
- said chain extender is a cyclic carbonate which has a molar mass of less than or equal to 500 g/mol, preferably chosen from cyclohexane bis carbonate, resorcinol bis carbonate, glycerol tricarbonate and phloroglucinol tricarbonate.

**12.** The rubber composition according to claim 11, wherein:

- said at least one elastomer is an apolar diene elastomer, preferably chosen from natural rubber (NR), polyisoprenes (IR), polybutadienes (BR) and styrene-butadiene copolymers (SBR),
- said reinforcing filler comprises a carbon black, for example of N330 grade, present in the composition in an amount of between 15 and 30 phr (phr: parts by weight per 100 parts of elastomer(s)),
- said polymer bearing urethane groups is present in the composition in an amount of between 15 and 30 phr, and
- the total amount of said carbon black and of said polymer bearing urethane groups in the composition is between 35 and 55 phr,

preferably wherein the composition satisfies at least one and preferably all of the following conditions (i-a) to (v-a):

(i-a) G' 0,5 % / G' 20 % ≤ 1.12 for T = 100° C,
(ii-a) G' 0,5 % / G' 20 % ≤ 1.20 for T = 65° C,
(iii-a) G' 0,5 % / G' 20 % ≤ 1.30 for T = 25° C,
(iv-a) G' 0,5 % / G' 20 % ≤ 1.40 for T = 0° C,
(v-a) G' 0,5 % / G' 20 % ≤ 1.50 for T = -30° C.

and preferably wherein the composition also satisfies at least one and preferably all of the following conditions (i-b) to (v-b):

(i-b) G' 0,5 % / G' 20 % ≤ 1.10 for T = 100° C,
(ii-b) G' 0,5 % / G' 20 % ≤ 1.15 for T = 65° C,
(iii-b) G' 0,5 % / G' 20 % ≤ 1.20 for T = 25° C,
(iv-b) G' 0,5 % / G' 20 % ≤ 1.25 for T = 0° C,
(v-b) G' 0,5 % / G' 20 % ≤ 1.40 for T = -30° C.

**13.** A mechanical member with a dynamic function in particular chosen from antivibration supports and elastic articulations for motorized vehicles or industrial devices, said member comprising at least one elastic part which consists of a rubber composition and which is configured to be subjected to dynamic stresses, in which said composition is as defined in one of the preceding claims.

**14.** A process for preparing a rubber composition according to any one of claims 1 to 12, in which the process comprises the following steps:

a) the formation of a noncrosslinked mixture comprising a dispersion, in said at least one elastomer, of said polymer bearing urethane groups via said thermomechanical blending reaction of said at least one elastomer with said reinforcing filler, said precursors and said chain extender, said reaction preferably being performed in an internal mixer at a maximum temperature of between 130°C and 180°C,
b) addition to the mixture of a crosslinking system with mechanical working of the crosslinkable mixture thus obtained preferably performed in an open mill at a maximum temperature below 80°C, then
c) crosslinking of the crosslinkable mixture by vulcanization in a press at a temperature of between 130°C and 180°C, preferably by compression molding, said polymer bearing urethane groups being chemically co-crosslinked with said at least one elastomer, forming covalent bonds therewith,
preferably wherein said precursors form a first precursor and a second precursor which are added separately in step a) after said at least one elastomer, said polymer bearing urethane groups being segmented with rigid segments comprising said chain extender and said first precursor and with flexible segments comprising said second precursor,
and preferably wherein the total mass fraction of said first precursor and of said chain extender in said polymer bearing urethane groups formed in step a) is between 20% and 40%, preferably between 25% and 35%.

**15.** A use of a polymer bearing urethane groups dispersed in a rubber composition as claimed in one of claims 1 to 12, the rubber composition being based on at least one elastomer, via an *in situ* thermomechanical blending reaction of said at least one elastomer with a reinforcing filler, precursors of said polymer and a chain extender,

to reduce the Payne effect in the composition at a temperature T inclusively between -30°C and 100°C, the Payne effect being quantified by said ratio G' 0.5% / G' 20% of storage moduli G' relative to the complex shear moduli G* of the composition,
in comparison with a rubber mixture based on said at least one elastomer, free of said polymer bearing urethane

groups and comprising said reinforcing filler in an amount in phr equal to the sum of the phrs, in the composition, of said reinforcing filler and of said polymer bearing urethane groups
and preferably wherein the composition comprises (phr: parts by weight per 100 parts of elastomer(s)) from 10 to 40 phr of a carbon black as reinforcing filler and from 10 to 50 phr of said polymer bearing urethane groups, said use being:

to reduce said ratio G' 0.5% / G' 20% by more than 40%, and optionally also to maintain, to within 15%, the Shore A hardness of the composition,
in comparison with said rubber mixture free of said polymer bearing urethane groups and comprising said carbon black in an amount in phr equal to the sum of the phrs, in the composition, of said carbon black and of said polymer bearing urethane groups.

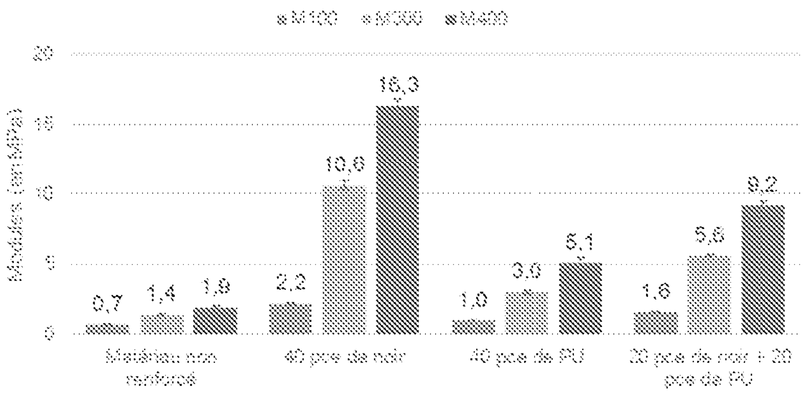


| | | | | |
|---|---|---|---|---|
| Dureté (Shore A) | 33 | 55 | 41 | 47 |
| G*0,5%/G*20% (100°C) | 1,02 | 1,94 | 1,01 | 1,05 |

Fig. 1

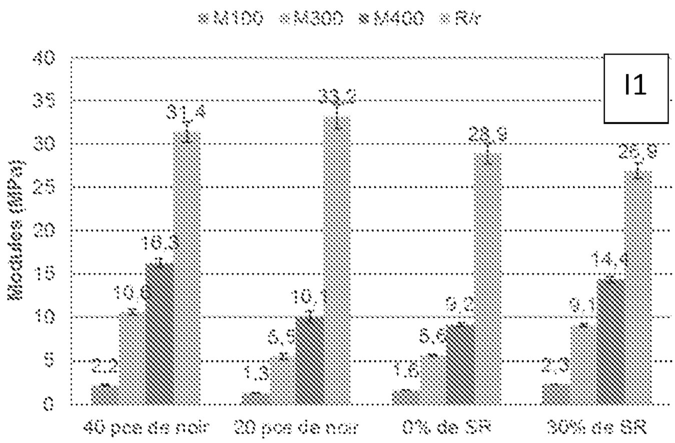


| | | | | |
|---|---|---|---|---|
| Dureté (Shore A) | 55 | 44 | 47 | 55 |
| G*0,5%/G*20% | 1,94 | 1,19 | 1,05 | 1,08 |

Fig. 2

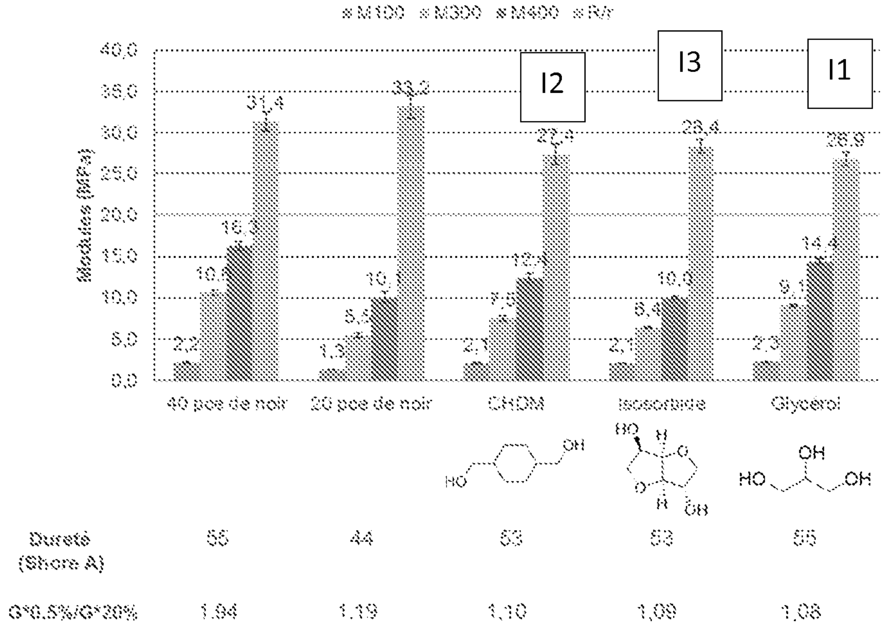
M100 M300 M400 R/r
I2
I3
I1
Modules (MPa)
40 pce de noir
20 pce de noir
CHDM
Isosorbide
Glycerol
Dureté (Shore A)
55
44
53
53
55
G*0.5%/G*20%
1,94
1,19
1,10
1,09
1,08

Fig. 3

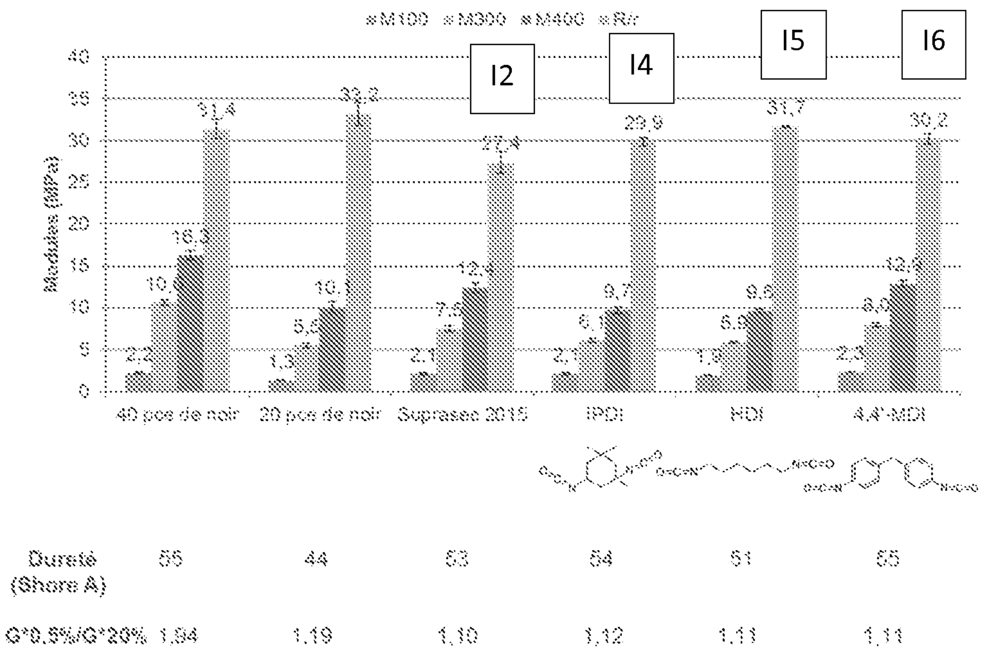
M100 M300 M400 R/r
I2
I4
I5
I6
Modules (MPa)
40 pce de noir
20 pce de noir
Suprasec 2015
IPDI
HDI
4,4'-MDI
Dureté (Shore A)
55
44
53
54
51
55
G*0.5%/G*20%
1,94
1,19
1,10
1,12
1,11
1,11

Fig. 4

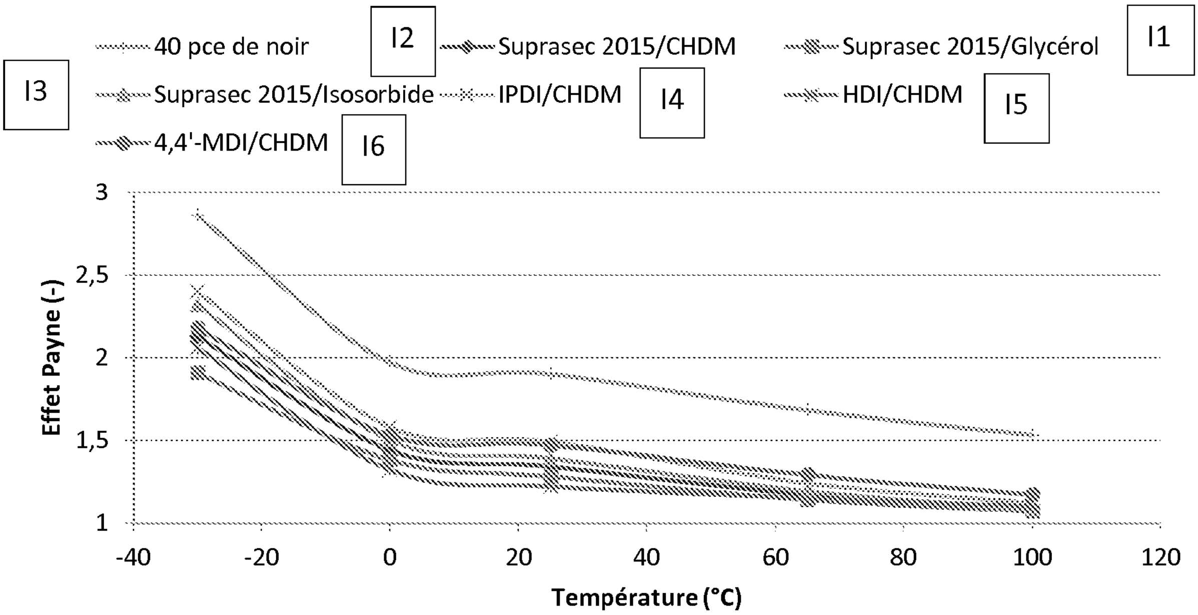
40 pce de noir
I2
Suprasec 2015/CHDM
Suprasec 2015/Glycérol
I1
I3
Suprasec 2015/Isosorbide
IPDI/CHDM
I4
HDI/CHDM
I5
4,4'-MDI/CHDM
I6
Effet Payne (-)
3
2,5
2
1,5
1
-40
-20
0
20
40
60
80
100
120
Température (°C)

Fig. 5

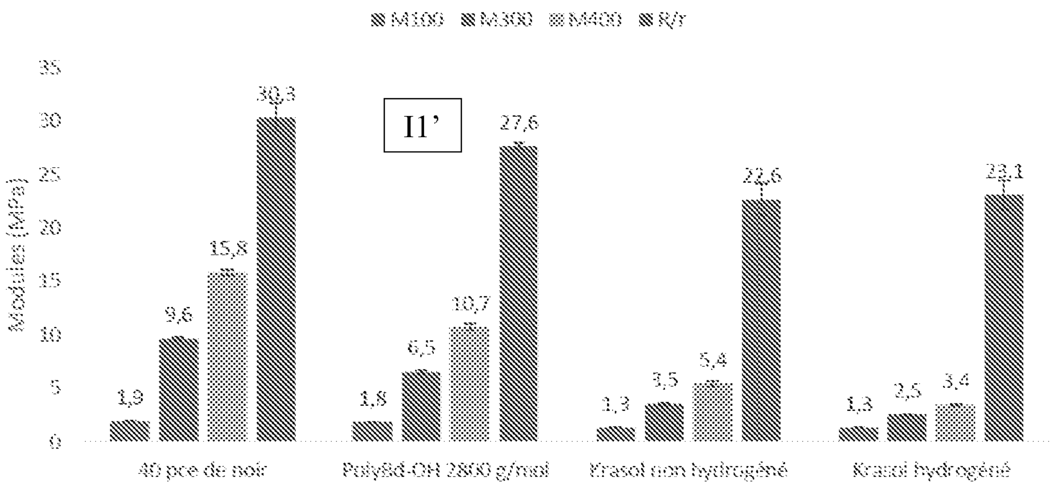
M100
M300
M400
R/r
I1'
Modules (MPa)
35
30
25
20
15
10
5
0
1,9
9,6
15,8
30,3
1,8
6,5
10,7
27,6
1,3
3,5
5,4
22,6
1,3
2,5
3,4
23,1
40 pce de noir
PolyBd-OH 2800 g/mol
Krasol non hydrogéné
Krasol hydrogéné

Fig. 2a

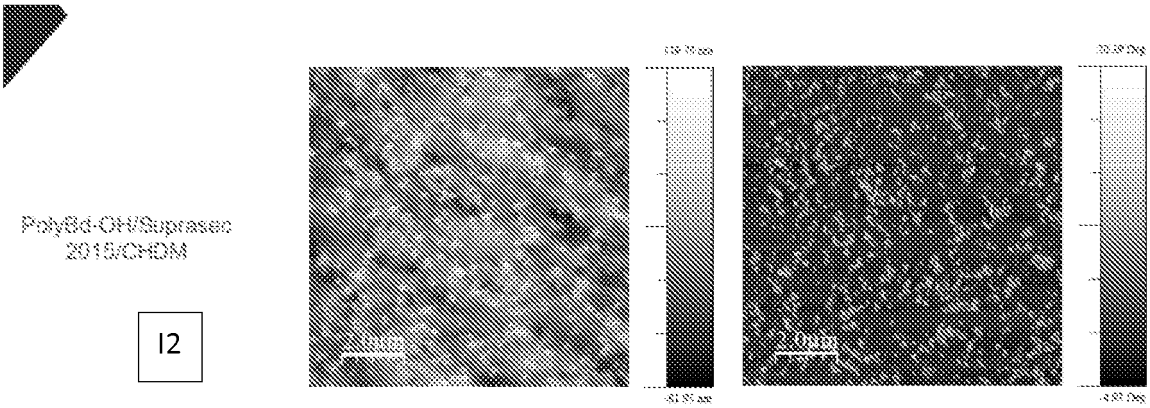


Fig. 6

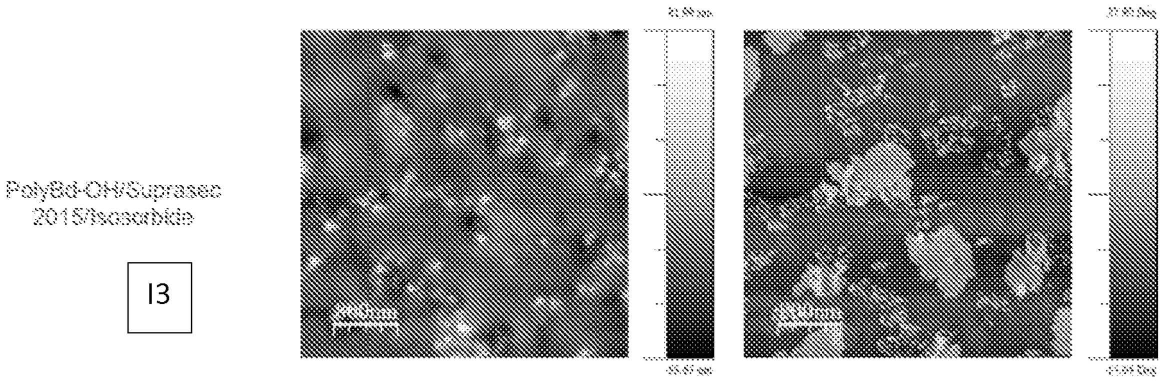


Fig. 7

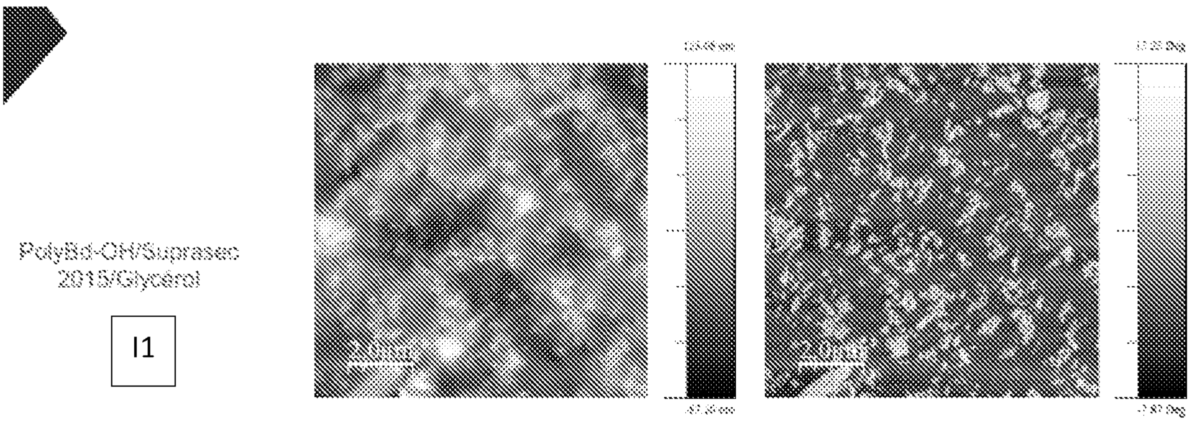


Fig. 8

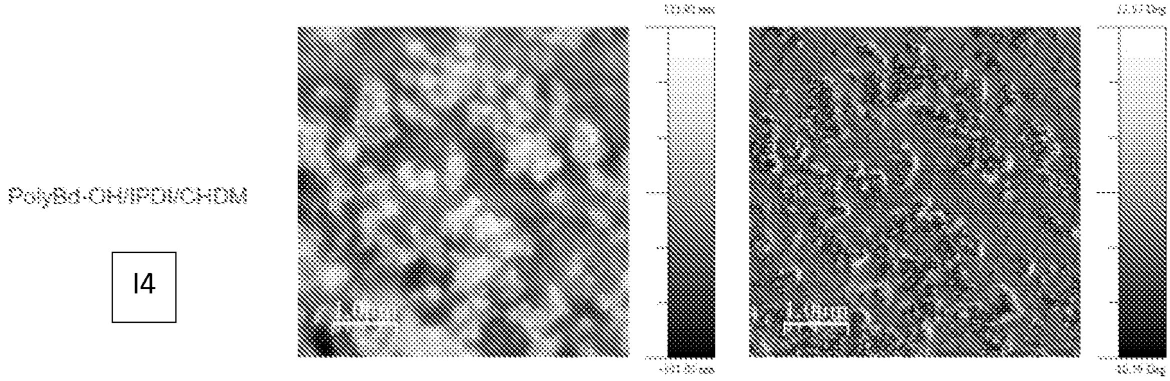


Fig. 9

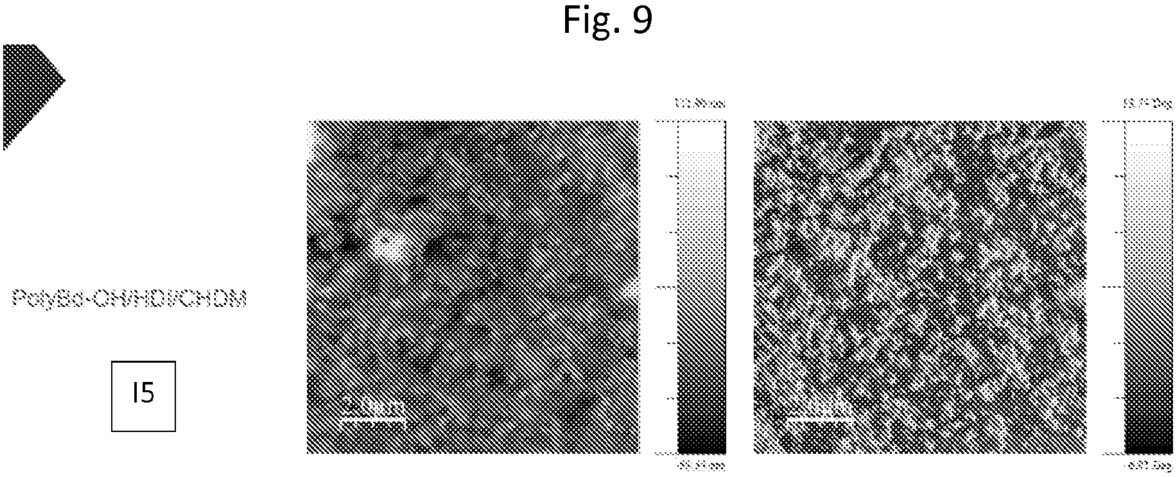


Fig. 10

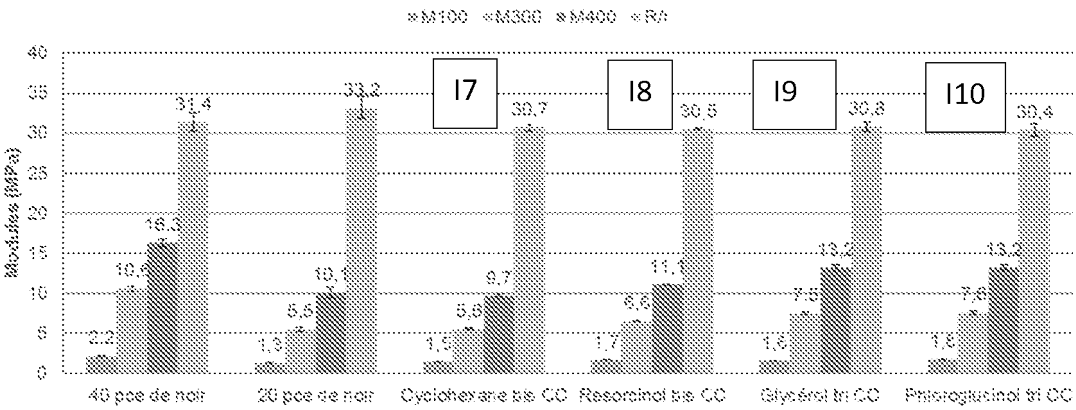


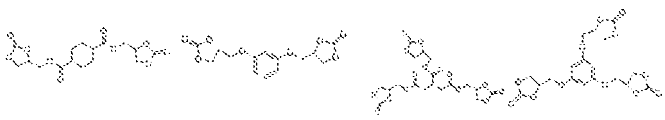

| | | | | | | |
|---|---|---|---|---|---|---|
| Dureté (Shore A) | 55 | 44 | 48 | 51 | 49 | 52 |
| G*0,5%/G*20% | 1,94 | 1,19 | 1,04 | 1,05 | 1,05 | 1,04 |

Fig. 11

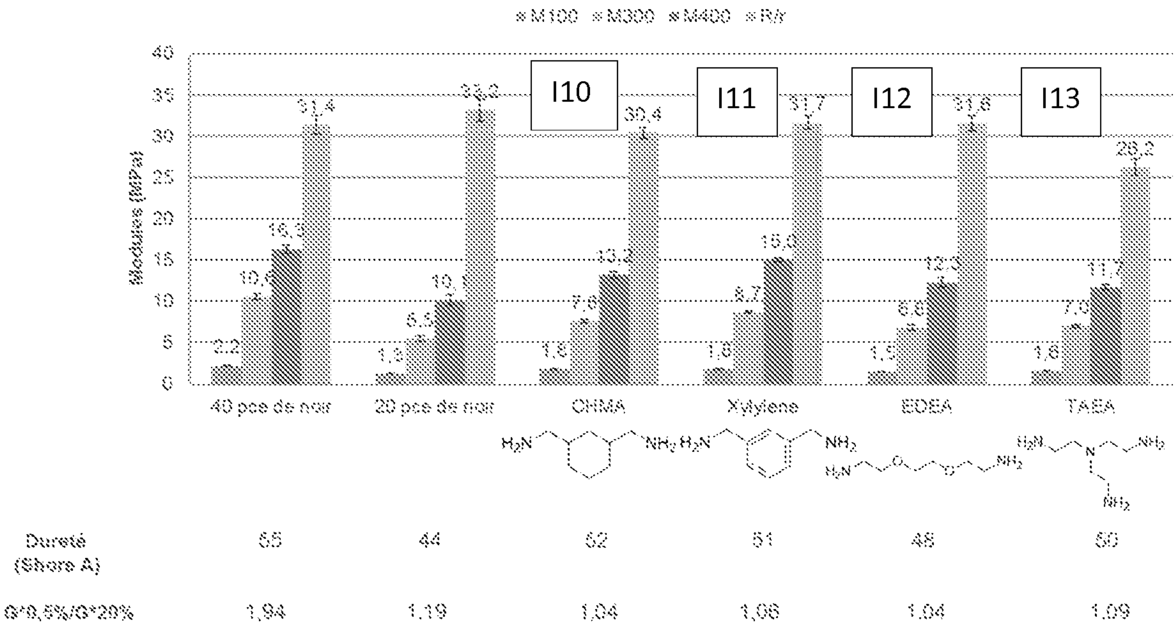
M100 M300 M400 R/r
Modules (MPa)
I10
I11
I12
I13
40 pce de noir
20 pce de noir
CHMA
Xylylene
EDEA
TAEA
Dureté (Shore A) 55 44 52 51 48 50
G*0,5%/G*20% 1,94 1,19 1,04 1,06 1,04 1,09

Fig. 12

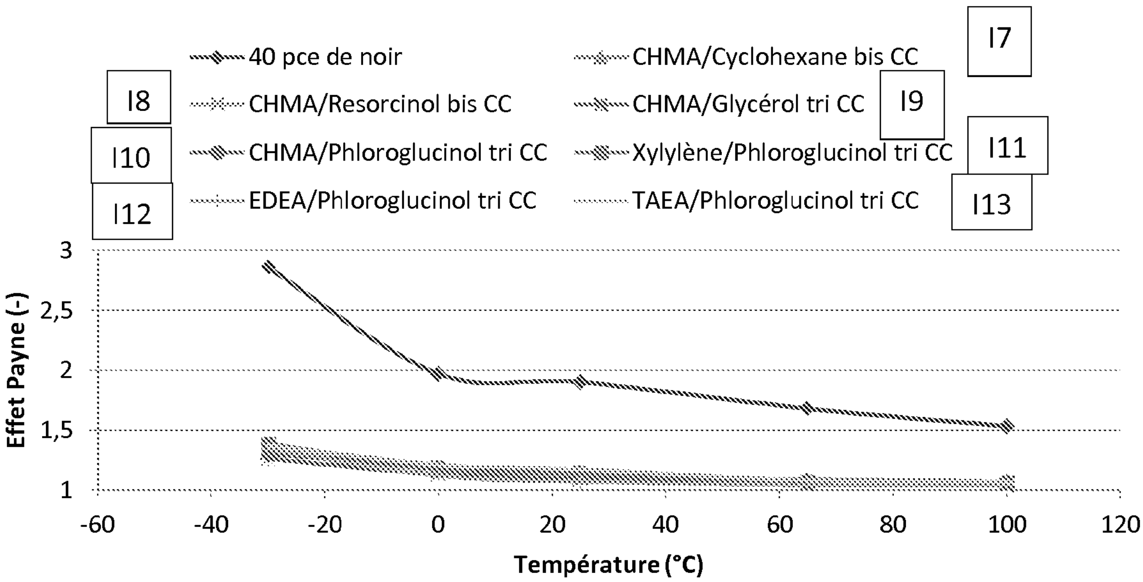
40 pce de noir
CHMA/Cyclohexane bis CC
I7
I8
CHMA/Resorcinol bis CC
CHMA/Glycérol tri CC
I9
I10
CHMA/Phloroglucinol tri CC
Xylylène/Phloroglucinol tri CC
I11
I12
EDEA/Phloroglucinol tri CC
TAEA/Phloroglucinol tri CC
I13
Effet Payne (-)
Température (°C)

Fig. 13

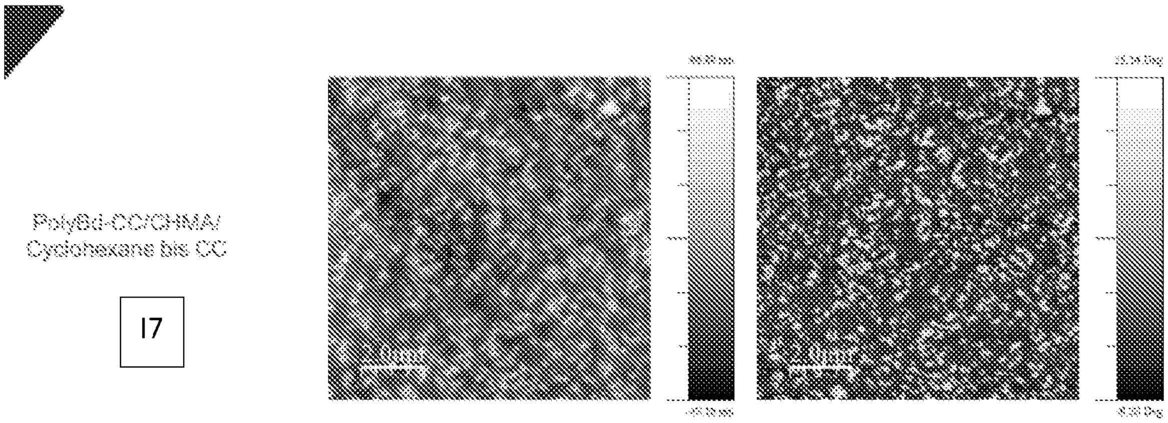


Fig. 14

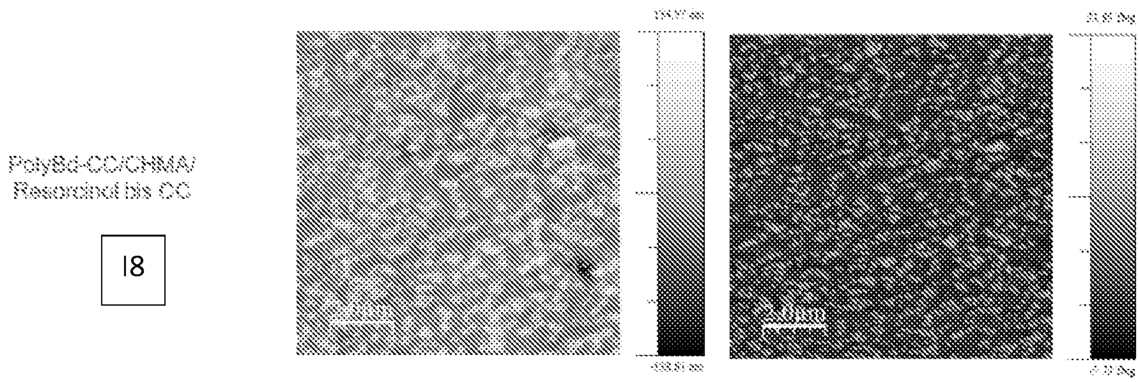


Fig. 15

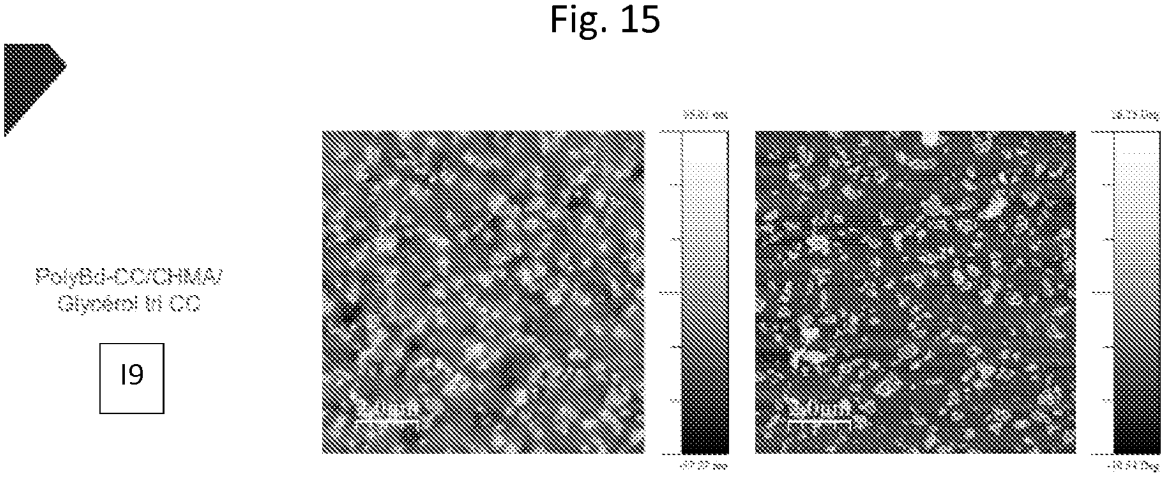


Fig. 16

PolyBd-CC/CHMA/
Phloroglucinol tri CC

I10

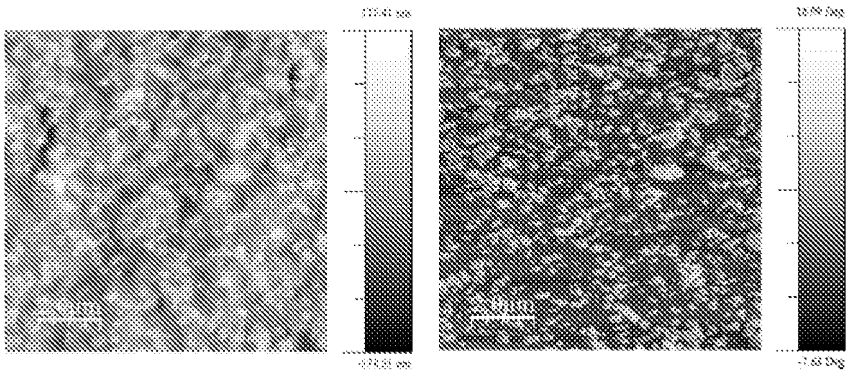

Fig. 17

PolyBd-CC/Xylylene/
Phloroglucinol tri CC

I11

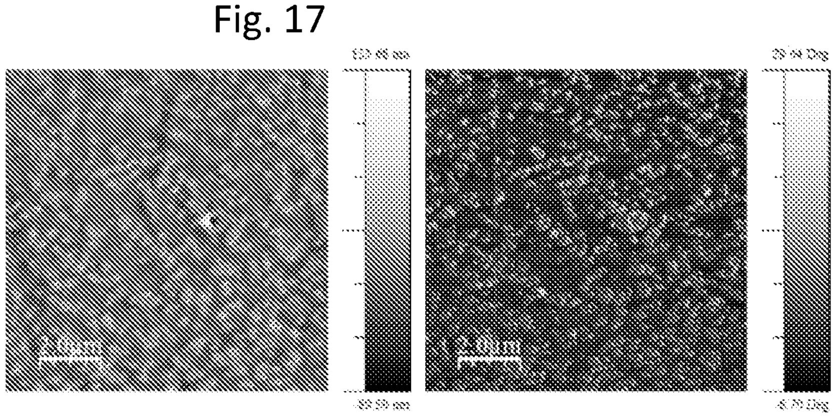

Fig. 18

PolyBd-CC/EDEA/
Phloroglucinol tri CC

I12

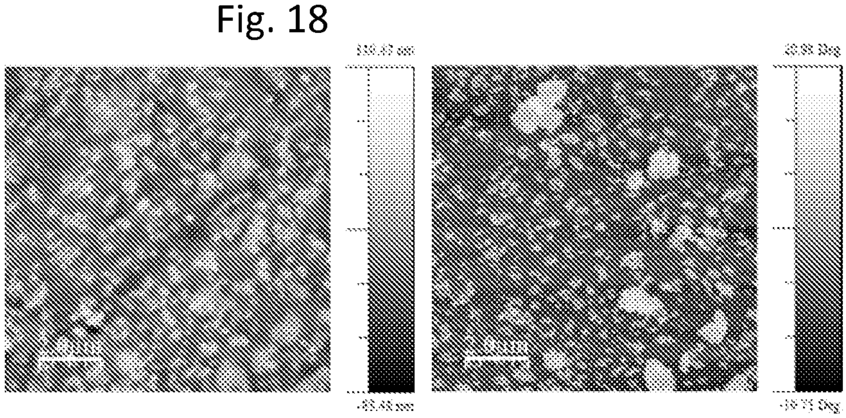

Fig. 19

PolyBd-CC/TAEA/
Phloroglucinol tri CC

I13

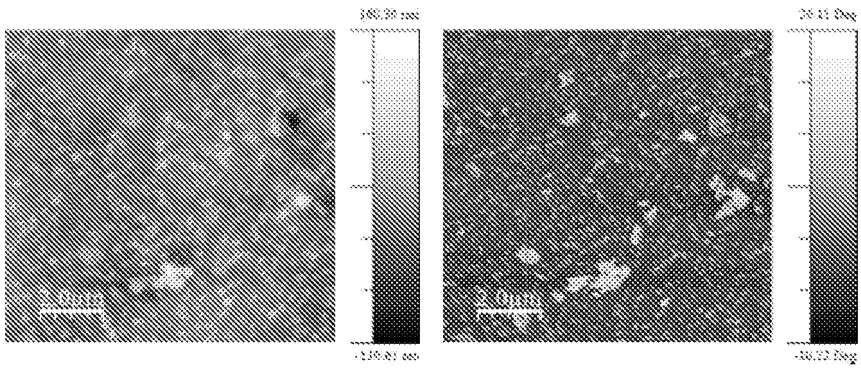

Fig. 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015032681 A1
- US 9416227 B2